# EUROPÄISCHE PATENTSCHRIFT

(11) **EP 2 734 915 B1**
(45) Veröffentlichungstag und Bekanntmachung des Hinweises auf die Patenterteilung: **29.07.2015**
(21) Anmeldenummer: 12733003.3
(22) Anmeldetag: 21.06.2012
(51) Int. Cl.: G06F 3/044

(54) **KAPAZITIV ARBEITENDE TASTFELDVORRICHTUNG**
CAPACITIVE TOUCH PANEL
DISPOSITIF À PAVÉ TACTILE À FONCTIONNEMENT CAPACITIF

(30) Priorität: 22.07.2011 DE 102011108153
(43) Veröffentlichungstag der Anmeldung: 28.05.2014
(73) Patentinhaber: PolyIC GmbH & Co. KG, 90763 Fürth (DE)
(72) Erfinder: FIX, Walter, 90763 Fürth (DE); ULLMANN, Andreas, 90513 Zirndorf (DE)
(74) Vertreter: Louis Pöhlau Lohrentz
(86) Internationale Anmeldenummer: PCT/EP2012/061930
(87) Internationale Veröffentlichungsnummer: WO 2013/013904

(56) Entgegenhaltungen:
- EP-A2- 2 045 698
- WO-A1-2011/065383
- US-A1- 2011 022 351
- US-A1- 2011 102 370

## Beschreibung

Die Erfindung betrifft einen als kapazitive Tastfeldvorrichtung ausgebildeten Mehrschichtkörper mit einem transparenten ersten Bereich, in dem eine Vielzahl von Touchfeldern angeordnet ist.

Für die Herstellung von sensorisch gesteuerten Touchscreen wird bisher off ein mehrlagiger Aufbau benötigt, der mindestens zwei Leiterbahnebenen aufweist, die durch einen Isolator getrennt sind. Die beiden Leiterbahnebenen werden hierbei z.B. aus einem transparenten leitfähigen Material wie ITO gebildet.

EP 2 045 698 A2 und US 2011/0022351 A1 offenbaren optisch transparente, einlogige, kapazitive Tastfeldvorrichtungen. US 2011/0102370 A1 und WO 2011/065383 offenbaren diskontinuierliche Elektrodenstrukturen für kapazitive Tastfeldvorrichtungen.

Der Erfindung liegt die Aufgabenstellung zugrunde, einen verbesserten Aufbau eines Mehrschichtkörpers mit einer in einem transparenten Bereich des Mehrschichtkörpers angeordneten Vielzahl von Touchfeldern anzugeben.

Diese Aufgabe wird durch eine Vorrichtung gemäß Anspruch 1 gelöst.

Vorteilhafte Ausbildungen der Erfindung sind in den Unteransprüchen bezeichnet.

Durch die Erfindung wird der Vorteil erzielt, dass sich durch die einlagige Realisierung der Touchfelder und deren Verdrahtung im transparenten Bereich sowie durch die spezielle Ausgestaltung und Strukturierung der ersten elektrisch leitfähigen Schicht Touchfelder hoher Transparenz kostengünstig fertigen lassen.

Gemäß einer vorteilhaften Ausführungsform wird n und / oder m ≥ 3 und insbesondere ≥ 4 gewählt. Weiter ist es vorteilhaft, wenn die n Sendebereiche und/oder m Empfangsbereiche von dem jeweiligen Verbindungsbereich innerhalb des ersten Bereichs miteinander verbunden sind.

Hierbei ist es weiter von Vorteil, wenn zwischen 30 und 70 % der Empfangsbereiche und/oder der Sendebereiche unterschiedliche Touchfelder über einen Verbindungsbereich mit n bzw. m anderen Sendebereichen bzw. Empfangsbereichen verbunden sind.

Gemäß der Erfindung sind die Touchfelder in einer 2-dimensionalen Matrix mit zwei oder mehr Spalten und zwei oder mehr Zeilen angeordnet, insbesondere mit vier oder mehr Spalten und vier oder mehr Zeilen angeordnet. Als vorteilhaft hat sich hierbei erwiesen, dass die Matrix zwischen vier und zehn Zeilen und vier oder mehr Spalten, insbesondere 16 oder mehr Spalten aufweist. Es hat sich gezeigt, dass bei Einhaltung dieser Bemessungsregeln eine besonders kostengünstige Herstellung im Vergleich zu einem 2-lagigen Aufbau ergibt.

Die Touchfelder können hierbei in den Zeilen bzw. Spalten der Matrix in einer konstanten Rasterweite aufeinander abfolgen. Es ist jedoch auch möglich, dass die Rasterweite variiert, und dass die Spalten und Zeilen der Matrix nicht jeweils durch eine Linie, sondern durch ein transformiertes Koordinatensystem bestimmt sind und so beispielsweise wellenlinienförmig oder kreisbogenförmig ausgebildet sind.

Gemäß der Erfindung ist bei Touchfeldern eine erste Gruppe von Touchfeldern der Sendebereiche jeweils links vom Empfangsbereich angeordnet und bei den Touchfeldern einer zweiten Gruppe von Touchfeldern der Sendebereiche jeweils rechts vom Empfangsbereich angeordnet. In jeder der Zeilen der Matrix sind nun alternierend Touchfelder der ersten Gruppe und Touchfelder der zweiten Gruppe nebeneinander angeordnet, sodass sich an den Grenzen zwischen zwei Touchfelder derselben Zeile jeweils zwei Sendebereiche oder zwei Empfangsbereiche gegenüberliegen. Durch eine derartige variierende Anordnung von Sendebereichen und Empfangsbereichen der Touchfelder wird die Anzahl von Sendebereichen und Empfangsbereichen, welche miteinander mit einem Verbindungsbereich elektrisch verbunden werden können ohne die Funktion der Touchfelder oder die Transparenz des ersten Bereichs zu beeinträchtigen, erheblich erhöht werden.

Hierbei ist zu berücksichtigen, dass für die Anwendung der oben dargelegten Bemessungsregeln davon ausgegangen wird, dass die den Empfangsbereich von dem Sendebereich trennende Spalten mehr in Richtung der Spalten der Matrix orientiert ist, als in Richtung der Zeilen der Matrix orientiert ist. Für die Bestimmung, welche Abfolgerichtung nun eine Spalte oder eine Zeile der Matrix ausbildet, ist für vorgehende Bemessungsregeln damit die vorgehende Definition zugrunde zu legen. Rechts und links entspricht hierbei der Richtung zur nachfolgenden bzw. vorgehenden Spalte.

Basierend auf dieser grundsätzlichen Bemessungsregel ergeben sich insbesondere folgende vorteilhafte Ausführungsvarianten.

Als besonders vorteilhaft hat es sich erwiesen, dass weiter in jeder Spalte jeweils Touchfelder dergleichen Gruppe von Touchfeldern angeordnet sind. Damit ergeben sich innerhalb der Matrix Bereiche, bei denen zumindest vier Sendebereiche oder vier Empfangsbereiche benachbart zueinander angeordnet sind.

Vorteilhaft ist es hier, vier derart benachbart zueinander angeordnete Sendebereiche zu einer Sendegruppe zusammenzufassen und über einen der Verbindungsbereiche miteinander und mit einem zugeordneten Kontaktbereich zu verbinden und / oder vier solche benachbart zueinander angeordnete Empfangsbereiche zu einer Empfangsgruppe zusammenzufassen und über einen der Verbindungsbereiche miteinander und mit dem zugeordneten Kontaktbereich zu verbinden. Hierdurch wird der Anteil der Verbindungsbereiche an der Gesamtfläche des ersten Bereichs weiter reduziert und so die Transparenz des ersten Bereichs sowie die Funktionsfähigkeit der Touchbereiche weiter verbessert.

Bei einer Matrix von beispielsweise 4 x 4 Touchfelder lassen sich so beispielsweise vier Sendegruppen oder Empfangsgruppen ausbilden. Bei einer entsprechend größeren Anzahl von Touchfeldern in der Matrix ergibt sich eine entsprechend größere Anzahl von Empfangsgruppen und Sendegruppen. Die Empfangs- und Sendegruppen sind hierbei bevorzugt schachbrettartig zueinander versetzt angeordnet. So folgen beispielsweise in Spaltenrichtung jeweils ein oder mehrere Sendegruppen oder Empfangsgruppen aufeinander, wohingegen sich in Zeilenrichtung Sendegruppen und Empfangsgruppen abwechseln. Hierbei ist die Abfolge von Sendegruppen und Empfangsgruppen in Spaltenrichtung jeweils um eine halbe Periode gegeneinander versetzt. Als Periode wird hierbei die Beabstandung der Flächenschwerpunkt von zwei in Spaltenrichtung aufeinanderfolgende Sendegruppen oder Empfangsgruppen verstanden.

Besonders vorteilhaft ist hier, wenn zu zumindest einer Sendegruppe vier Empfangsgruppen oder zu zumindest einer Empfangsgruppe vier Sendegruppen benachbart zueinander angeordnet sind.

Vorteilhaft ist weiter, wenn die Verbindungsbereiche, welche die Sendegruppen und Empfangsgruppen mit den zugeordneten Kontaktbereichen verbinden, im ersten Bereich von Innen nach Außen verlaufende Leiterbahnabschnitte aufweisen, die im Grenzbereich zwischen zwei Spalten oder zwei Zeilen der Matrix verlaufen. Besonders vorteilhaft ist hierbei, wenn solche Leiterbahnabschnitte nach allen Seiten von Innen nach Außen verlaufen, d. h. sowohl nach Oben, nach Unten, nach Links und nach Rechts solche Leiterbahnabschnitte verlaufen und damit solche Leiterbahnabschnitte sternförmig nach allen Seiten von Innen nach Außen verlaufen. Hierdurch wird der Vorteil erzielt, dass die Verbindungsbereiche gleichmäßig verteilt über den gesamten Randbereich des ersten Bereichs den ersten Bereich zur Kontaktierung der Kontaktbereiche verlassen und damit der Flächenanteil der Verbindungsbereiche am ersten Bereich besonders gering gehalten werden kann.

Weiter ist es möglich, dass zwei oder mehr benachbart angeordnete Sende- oder Empfangsbereiche zu einem vollflächigen elektrisch leitfähigen Bereich verbunden sind, der insbesondere eine rechteckförmige, quadratische oder achteckförmige Formgebung besitzt. So ist es beispielsweise möglich, dass die einer Sendegruppe oder Empfangsgruppe zugeordneten Sendebereiche bzw. Empfangsbereiche durch einen Verbindungsbereich zu einem vollflächig elektrisch leitfähigen Bereich verbunden werden, der insbesondere die oben beschriebene Ausformung besitzt.

Weiter hat es sich als vorteilhaft erwiesen, wenn die Zeilen der Matrix und die Längsachse des ersten Bereichs einen Winkelversatz zueinander aufweisen, insbesondere etwa einen 45°-Winkel einschließen. Besondere Vorteile ergeben sich hierbei gerade dann, wenn, wie oben ausgeführt, zwei oder mehr benachbart angeordnete Sende- oder Empfangsbereiche zu einem vollflächig elektrisch leitfähigen Bereich verbunden sind und insbesondere eine Sendegruppe oder eine Empfangsgruppe ausbilden.

Vorteilhafterweise weist hierbei der erste Bereich eine rechteckförmige oder eine quadratische Formgebung auf.

Weiter ist es vorteilhaft, wenn jeweils zwei oder mehr benachbart angeordnete Sende- oder Empfangsbereiche einer Sendegruppe oder einer Empfangsgruppe zugeordnet werden und ein oder mehrere der Verbindungsbereiche in Bezug auf den ersten Bereich von Innen nach Außen verlaufende Leiterbahnabschnitte aufweisen, die jeweils ein oder mehrere dieser Sende- oder Empfangsgruppen zerschneiden. So ist es beispielsweise möglich, dass jeweils vier benachbarte Sendebereiche bzw. Empfangsbereiche zu einer Sende- bzw. Empfangsgruppe zusammengefasst werden und diese Empfangsgruppe dann durch einen derartigen Verbindungsbereich zerschnitten werden. Hierdurch ist es möglich, trotz Zusammenfassung der Empfangsbereiche und der Sendebereiche in gleichartig ausgeformten Sendegruppen und Empfangsgruppen die Weglänge von Verbindungsbereichen und damit den sich ergebenen elektrisch Widerstand zu minimieren.

Weitere Vorteile ergeben sich dadurch, dass die Leiterbahnabschnitte in den Bereich, in dem sie eine Sende- oder Empfangsgruppe zerschneiden eine Verbreiterung aufweist oder wenn Empfangsgruppen oder Sendegruppen in den Ecken geometrisch gekürzt werden und so beispielsweise achteckförmig ausgebildet werden. Auch hierdurch lässt sich die Formgebung und vor allem die Länge von Verbindungsbereichen optimieren und so der elektrische Widerstand ohne Einschränkung der Transparenz verringern.

Weiter hat sich insbesondere eine punktsymmetrische oder spiegelsymmetrische Anordnung der Sendebereiche und der Empfangsbereiche der Matrix bewährt.

Gemäß der Erfindung sind in einem ersten Teilbereiche der Matrix sowohl in den Zeilen als auch in den Spalten alternierend Touchfelder der ersten Gruppe und zweiten Gruppe nebeneinander angeordnet, sodass sich an der Grenze zwischen zwei Touchfeldern derselben Zeile abwechselnd zwei Sendebereiche und zwei Empfangsbereiche gegenüberliegen, wobei die Matrix im ersten Teilbereich zwei oder mehr Zeilen und zwei oder mehr Spalten aufweist. Damit variiert bei dieser Ausführungsvariante die Abfolge der Ausbildung der Touchfelder sowohl in Spaltenrichtung als auch in Zeilenrichtung. Auch hierdurch lässt sich der notwendige Flächenanteil der Verbindungsbereiche erheblich reduzieren, wodurch die oben geschilderten Vorteile erzielt werden.

Bei einer derartigen Anordnung von Sendebereichen und Empfangsbereichen ist es besonders vorteilhaft entweder jeweils sämtliche Empfangsbereiche jeder Spalte oder jeder Spalte oder sämtliche Sendebereiche einer Spalte oder jeder Spalte über einen jeweiligen Verbindungsbereich miteinander elektrisch leitend zu verbinden. Der Verbindungsbereich besitzt hierbei vorteilhafterweise eine mäanderförmige Formgebung, da in Spaltenrichtung jeweils quer zueinander liegende Sendebereiche bzw. Empfangsbereiche miteinander durch den Verbindungsbereich elektrisch verbunden werden müssen.

Weiter ist es hierbei vorteilhaft, sämtliche Sendebereiche der obersten Zeile oder sämtliche Empfangsbereiche der oberen Zeile über einen jeweiligen Verbindungsbereich miteinander elektrisch zu verbinden.

Weiter ist es vorteilhaft, wenn ein oder mehrere der Verbindungsbereiche der ersten Teilbereiche in Richtung der Spalten der Matrix in Bezug auf den ersten Bereich von Innen nach Außen verlaufende Leiterbahnabschnitte aufweisen, die insbesondere in dem Grenzbereich zwischen zwei Spalten der Matrix angeordnet sind. Vorteilhaft ist es so, wenn die Anzahl der in Spaltenrichtung verlaufenden Leiterbahnabschnitte der Verbindungsbereiche mehr als das zweifache größer als die in Zeilenrichtung verlaufenden Leiterbahnabschnitte der Verbindungsbereiche ist.

Ein besonderer Vorteil der oben geschilderten Anordnung von Sende- und Empfangsbereich ist hierbei, dass sich in Zeilenrichtung eine beliebige Anzahl solcher ersten Teilbereiche nebeneinander anordnen lassen und auch in Spaltenrichtung oberhalb des ersten Teilbereichs noch ein entsprechender in seiner Anordnung der Sendebereiche und Empfangsbereiche aufgebauten zweiten Teilbereich anordnen lässt. Es ist so möglich eine Anordnung mit einer großen Zahl von Touchfeldern mittels dieser Vorgehensweise zu realisieren.

Ein derartiger zweiter Teilbereich, der vorzugsweise oberhalb des zweiten Teilbereichs angeordnet ist, weist so eine sowohl in Richtung der Spalten als auch in Richtung der Zeilen alternierende Folge von Touchfeldern der ersten Gruppe und der zweiten Gruppe auf. Besonders vorteilhaft ist es hierbei, wenn der zweite Teilbereich ein in Bezug auf die Grenze zwischen dem ersten und zweiten Teilbereich spiegelsymmetrische Anordnungen von Sendebereichen wie Empfangsbereichen und/oder von Verbindungsbereichen zu dem ersten Teilbereich aufweist. Hierdurch lässt sich der Anteil der Verbindungsbereiche am ersten Bereich weiter reduzieren.

Weiter weist die Matrix vorteilhafterweise mindestens einen dritten Teilbereich auf, der die gleiche Anordnung von Sendebereichen sowie Empfangsbereichen und/oder von Verbindungsbereichen wie der erste Teilbereich oder der zweite Teilbereich aufweist. Die dritten Teilbereiche sind in Zeilenrichtung neben den ersten Teilbereichen bzw. in Zeilenrichtung neben dem zweiten Teilbereich angeordnet.

Gemäß einem weiteren bevorzugten Ausführungsbeispiel der Erfindung sind in einem den ersten Bereiche umgebenen zweiten Bereichen eine elektrisch leitfähige zweite Schicht vorgesehen, über die zwei oder mehr Verbindungsbereiche der ersten Schicht elektrisch miteinander gekoppelt sind. Vorzugsweise sind hierbei jeweils mehrere Gruppen von Verbindungsbereichen der ersten Schicht miteinander gekoppelt, wodurch die Anzahl der Anschlusselemente deutlich reduziert werden kann. Hierbei kann der Vorteil ausgenutzt werden, dass der Mehrschichtkörper in dem zweiten Bereich eine deutlich geringere Transparenz aufzuweisen kann oder dort ggf. auch opak ausgebildet ist. Damit ist es möglich, die zweite elektrisch leitfähige Schicht kostengünstig mittels opaken, für das menschliche Auge sichtbaren elektrisch leitfähigen Bereichen beispielsweise aus einem Metall oder einem Leitsilber zu realisieren. Weiter ist es auch möglich, dass die Verbindungsbereiche in der ersten Schicht in dem zweiten Bereich nicht mehr für das menschliche Auge transparent ausgebildet sind und damit die Verbindungsbereiche im zweiten Bereich eine geringere Breite und eine bessere Leitfähigkeit aufweisen können.

Vorzugsweise weist jedes Touchfeld eine Breite und/oder Länge zwischen 4 mm und 40 mm, bevorzugt zwischen 6 mm und 20 mm auf.

Bevorzugt weist jeder Sendebereich und/oder Empfangsbereich eine Breite und/oder Länge zwischen 2 mm und 20, bevorzugt zwischen 3 und 10 auf.

Der trennende Spalt zwischen den Sendebereichen und Empfangsbereichen weist vorzugsweise eine Breite zwischen 5 µm und 1000 µm, insbesondere zwischen 10 µm und 500 µm auf. Die Länge des Spalts beträgt weiter bevorzugt zwischen 4 mm und 10 mm.

Weiter ist es von Vorteil, wenn der Spalt zwischen Sendebereich und Empfangsbereich mäanderförmig ausgebildet ist, insbesondere in jedem Touchfeld mäanderförmig ausgebildet ist.

Gemäß einem bevorzugten Ausführungsbeispiel der Erfindung ist eines, mehrere oder alle Touchfelder dreieckig ausgebildet. Hierbei ist es weiter bevorzugt, wenn in einem derartigen dreieckförmigen Touchfeld jeweils ein mäanderförmiger Spalt zwischen dem Sendebereich und dem Empfangsbereich des Touchfelds ausgebildet ist. Hierbei ist es insbesondere von Vorteil, wenn hierbei sowohl der Sendebereich als auch der Empfangsbereich eine Dreiecksform besitzen, die auf einer ihrer Seiten kammförmige Ausnehmungen besitzt und der Sendebereich fingerförmig in die kammförmigen Ausnehmungen des Empfangsbereichs eingreift und umgekehrt. Die Länge der Ausnehmungen ist hierbei vorzugsweise nicht konstant. Vorzugsweise folgt die Länge der Ausnehmungen hierbei der dreiecksförmigen Formgebung. Die Länge der Ausnehmungen ist so in der Mitte der substrukturierten Kante der dreieckförmigen Sende- oder Empfangsbereiche am größten und fällt nach beiden Richtungen ausgehend von der Mitte ab.

Weiter ist es möglich, dass der jeweilige trennende Spalt zwischen den Sendebereichen und den Empfangsbereichen eine andere Breite aufweist, als der Spalt zwischen den herausgeführten Anschlussleiterbahnen innenliegender Touchfelder und dem jeweils angrenzenden Sende- und/oder Empfangsbereich und breiter oder auch schmäler ist, vorzugsweise sich um 20 %, insbesondere um 50 % unterscheidet.

Gemäß einem bevorzugten Ausführungsbeispiel der Erfindung ist die Breite und/oder Beabstandung der leitfähigen, opaken Bahnen in den Sendebereichen, Empfangsbereichen und/oder Verbindungsbereichen so gewählt, dass diese Bereiche einer mittlere Flächenleitfähigkeit zwischen 0,1 Ohm (Ohm square) und 10 Ohm (Ohm square), bevorzugt zwischen 0,5 Ohm (Ohm square) und 2 Ohm (Ohm square) aufweisen.

Die Breite der nicht transparenten leitfähigen Bahnen liegt vorzugsweise im Bereich zwischen 1 µm bis 40 µm, bevorzugt zwischen 5 µm bis 25 µm. Die Dicke der nicht transparenten leitfähigen Bahnen liegt im Bereich zwischen 3 nm und 5 µm, bevorzugt zwischen 40 µm und 1 µm. Die leitfähigen nicht transparenten Bahnen können hierbei aus einem beliebigen elektrisch leitfähigen Material oder einer Mischung mehrerer Materialien gebildet sein. Bevorzugt sind die Bahnen hierbei aus einem Metall, insbesondere aus Silber, Kupfer, Gold, Aluminium und/oder aus einer Legierung oder einer leitfähigen Paste, sowie aus einem sonstig leitfähigen Stoff, beispielsweise einer organischen Verbindung mit bewegungsfähigen Ladungsträger wie Polyanilin, Polythiophen und anderen gebildet. Sämtliche Materialien können dotiert vorliegen. Weiter können bei der Bildung des Musters die leitfähigen Bahnen von verschiedenartig ausgeformten Bahnen gebildet sein.

Weiter kann die elektrisch leitfähige erste Schicht auch mit einer Kontaktverstärkung versehen sein, die zur besseren Signalübertragung dient. Diese kann beispielsweise aus Leitsilber oder Carbonblack bestehen.

Die leitfähigen Bahnen werden bevorzugt in hoch auflösenden Mustern auf das Trägersubstrat appliziert. Die leitfähigen Bahnen bestehen hierbei aus einem Material und sind mit einer Materialdicke aufgebracht, bei welcher die erste elektrisch leitfähige Schicht bei vollflächiger Ausbildung mittels dieser Materialien für den menschlichen Betrachter nicht transparent, insbesondere opak oder zumindest nur semitransparent erscheint. Die leitfähigen Bahnen als solche sind damit nicht transparent und weisen insbesondere einer Transmission von weniger als 5 %, bevorzugt von weniger als 1 % auf. Die Transparenz, die die elektrisch leitfähigen Bereiche der Empfangs-, Sende- und Verbindungsbereiche für den menschlichen Betrachter im ersten Bereich besitzen, wird so durch deren geringe Breite und damit durch die hoch aufgelöste Strukturierung des Musters von leitfähigen Bahnen erreicht, und nicht durch eine Transparenz des leitfähigen Materials als solchem. Die Transparenz kann hierbei beispielsweise durch die oben dargelegte geringe Breite der leitfähigen Bahnen und je nach verwendetem Material auch durch eine Abmessung der Breite der leitfähigen Bahnen und deren Beabstandung unterhalb von 250 µm bewirkt werden. Zur Vermeidung von Moire-und Beugungseffekten ist es hierbei vorteilhaft, als Muster für die Strukturierung der leitfähigen Bahnen ein Muster zu wählen, welches keine Periodizität aufweist. Insbesondere ist es hierbei bevorzugt auf die Ausbildung von geraden Linien zu verzichten und gewellte und/oder gezackte Linien mit beispielsweise aperiodisch oder zufälliger Strukturabfolge zu wählen. Weiter ist bevorzugt, wenn das Muster eine Vielzahl von Kreuzungspunkten von solchen elektrisch leitfähigen Bahnen aufweist und so beispielsweise aus der Überlagerung zwei eine unterschiedliche mittlere Raumrichtung aufweisenden Linienraster gebildet wird.

Bevorzugt wird zur Herstellung der Strukturierung der ersten elektrisch leitfähigen Schicht das elektrisch leitfähige Material, beispielsweise ein Metall, in der gewünschten Schichtdicke, beispielsweise durch Sputtern oder Bedampfen aufgebracht und anschließend mittels eines Strukturierungsverfahrens, beispielsweise positiv, negativ Ätzen partiell wieder entfernt. Weiter ist es auch möglich, das Muster von leitfähigen Bahnen mittels Druckens eines entsprechend leitfähigen Stoffes aufzubringen.

Die Breite der Leiterbahnabschnitte der Verbindungsbereiche liegt vorzugsweise im Bereich zwischen 300 und 500 µm und die Beabstandung zwischen elektrisch leitfähigen Bereichen der ersten Schicht, die galvanisch voneinander getrennt sein sollen, liegt im Bereich von 10 µm bis 5 mm.

Im Folgenden wird die Erfindung anhand von mehreren Ausführungsbeispielen unter Zuhilfenahme der beiliegenden Zeichnungen beispielhaft verdeutlicht.
Fig. 1a zeigt eine schematische Draufsicht auf einen Mehrschichtkörper.
Fig. 1b zeigt eine schematische Schnittdarstellung eines Mehrschichtkörpers.
Fig. 2a bis Fig. 2d zeigen schematische Darstellungen eines Ausschnitts aus einem Muster von elektrisch leitfähigen nicht transparenten Bahnen.
Fig. 3 zeigt eine schematische Darstellung einer Matrix mit mehreren Touchfeldern.
Fig. 4a und Fig. 4b zeigt eine Matrix mit einer Vielzahl von Touchfeldern und einer speziellen Anordnung von Sende- und Empfangsbereichen der Touchfelder.
Fig. 5a bis Fig. 5e zeigen schematische Darstellungen von Anordnungen von Sendegruppen und Empfangsgruppen.
Fig. 6a und Fig. 6b zeigen funktionelle Darstellungen von Bereichen des Mehrschichtkörpers nach Fig. 1.
Fig. 7a und Fig. 7b zeigen schematische Darstellungen der Anordnung von Sende- und Empfangsbereichen für eine 2 x 2 bzw. 4 x 4 Matrix.
Fig. 8a und Fig. 8b zeigen schematische Darstellungen der Anordnung von Sendebereichen und Empfangsbereichen für eine 3 x 3 bzw. 6 x 3 Matrix.
Fig. 9a und Fig. 9b zeigen schematische Darstellungen der Anordnung von Sende- und Empfangsbereichen für eine 4x4 bzw. 8x4 Matrix.
Fig. 10a und Fig. 10b zeigen schematische Darstellungen der Anordnung von Sendebereichen und Empfangsbereichen für eine 5 x 5 bzw. 10 x 5 Matrix.
Fig. 11 zeigt eine schematische Darstellung der Anordnung und Kontaktierung von Sende- und Empfangsbereichen.
Fig. 12a bis Fig. 12c zeigen schematische Darstellungen der Anordnung von Sende- und Empfangsbereichen für eine 6 x 16, 8 x 14 bzw. 8 x 16 Matrix.

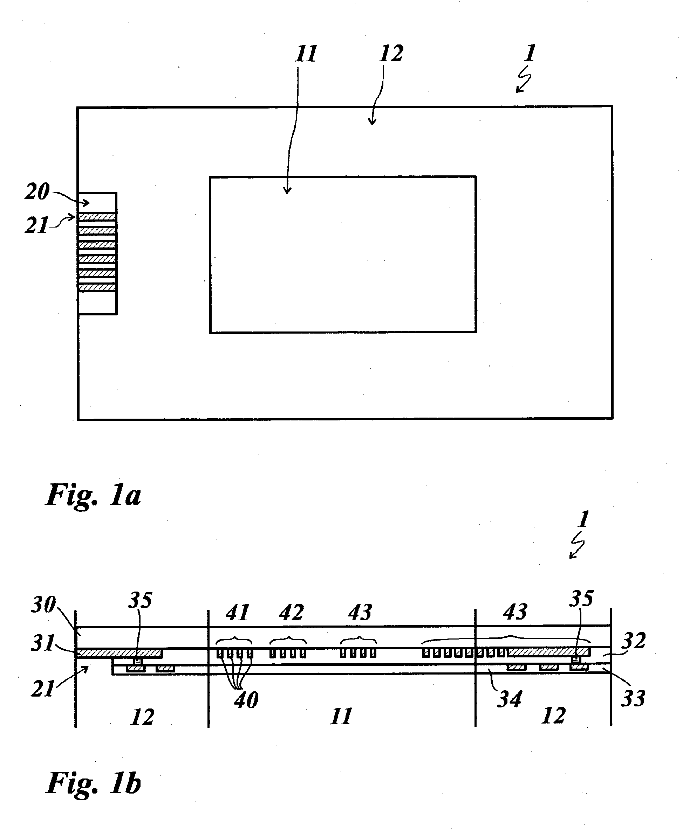

Fig. 1 a zeigt eine Draufsicht und Fig. 1b eine Schnittdarstellung eines Mehrschichtköpers 1. Der Mehrschichtköper 1 weist eine Trägersubstrat 30, eine erste elektrisch leitfähige Schicht 31, eine dielektrische Schicht 32, eine zweite elektrisch leitfähige Schicht 33 sowie eine dielektrische Schicht 34 auf.

Es ist auch möglich, dass der Mehrschichtkörper 1 nicht sämtliche der vorgenannten Schichten aufweist, sondern lediglich aus der Trägerschicht 30 und der ersten elektrisch leitfähigen Schicht 31 besteht. Weiter ist es möglich, dass der Mehrschichtkörper 1 neben diesen Schichten noch weitere Schichten umfasst, beispielsweise ein oder mehrere Dekorschichten oder weitere elektrisch leitfähige Schichten.

Der Mehrschichtkörper 1 weist einen Bereich 11 auf, in dem der Mehrschichtkörper 1 für den menschlichen Betrachter transparent erscheint, und einem Bereich 12 auf, in dem der Mehrschichtkörper 1 für den menschlichen Betrachter ebenfalls transparent erscheint, jedoch aber auch semitransparent oder opak ausgebildet sein kann. Weiter weist der Mehrschichtkörper 1 einen Kontaktverbinder 20 mit mehreren Kontaktfeldern 21 auf, über welchem eine elektrische Kontaktierung des Mehrschichtkörpers möglich ist. Es ist jedoch auch möglich, dass der Mehrschichtkörper 1 nicht über einen derartigen Kontaktverbinder verfügt und der Kontaktierung von elektrisch leitfähigen Schicht des Mehrschichtkörpers mittels elektrisch leitfähigen Klebeverbindungen, Bondverbindungen, Löt- oder Schweißverbindungen erfolgt.

Das Trägersubstrat 30 besteht vorzugsweise aus einer flexiblen Kunststofffolie, beispielsweise aus Polyethylen (PE), Polypropylen (PP), Polyvinylchlorid (PVC), Polystyrol (PS), Polyester (PE) und / oder Polycharbonat (PC). Diese Folie weist vorzugsweise eine Schichtdicke zwischen 15 µm und 300 µm, bevorzugt zwischen 23 und 100 µm auf.

Das Trägersubstrat 30 ist zumindest in dem Bereich 11 transparent ausgebildet. Vorzugsweise ist das Trägersubstrat jedoch vollflächig transparent ausgebildet und besteht so beispielsweise aus einer transparenten Kunststofffolie.

Die erste elektrisch leitfähige Schicht 31 besteht vorzugsweise aus einem Metall, beispielsweise Kupfer, Aluminium, Silber oder Gold. Diese Metallschicht wird bevorzugt in einer Schichtdicke zwischen 20nm und 100nm auf das Trägersubstrat 30 aufgebracht und strukturiert. Die Strukturierung erfolgt hierbei bevorzugt mittels eines Ätz- oder Waschverfahrens. Weiter ist es auch möglich, dass zwischen dem Trägersubstrat 30 und der ersten elektrisch leitfähigen Schicht 31 noch eine Haftvermittlungsschicht angeordnet ist, welche dann das Anhaften der ersten elektrisch leitfähigen Schicht 31 an dem Trägersubstrat 30 verbessert. Eine derartige Haftvermittlungsschicht ist vorzugsweise ebenfalls aus einem transparenten Material ausgebildet.

In der ersten elektrisch leitfähigen Schicht 31 sind in dem ersten Bereich 11 eine Vielzahl von elektrisch leitfähigen Sendebereichen 41, Empfangsbereichen 42 und Verbindungsbereichen 43 ausgebildet. Diese elektrisch leitfähigen Sendebereiche 41, Empfangsbereiche 42 und Verbindungsbereiche 43 bestehen hierbei jeweils aus einem Muster von elektrisch leitfähigen, nicht transparenten Bahnen 40, deren Breite im ersten Bereich 11 so gewählt ist, dass die elektrisch leitfähigen Sendebereiche, Empfangsbereiche und Verbindungsbereiche für das menschliche Auge transparent erscheinen. Die Bahnen 41 besitzen so beispielsweise eine Breite zwischen 1 µm und 40 µm, bevorzugt zwischen 5 µm und 25 µm. Die Verbindungsbereiche 43 verbinden jeweils ein oder mehrere der Sendebereiche 41 oder Empfangsbereiche 42 mit einem außerhalb des Bereichs 11 angeordneten Kontaktbereich. Dabei ist es auch möglich und auch vorteilhaft, dass die Verbindungsbereiche 43 außerhalb des Bereichs 11 vollflächig mit der elektrisch leitfähigen Schicht 31 belegt sind, oder mit einem Muster von elektrisch leitfähigen, nicht transparenten Bahnen 40 belegt sind, deren Breite so gewählt ist, dass die Verbindungsbereiche 43 in diesen Bereich, d. h. in dem Bereich 12, der für das menschliche Auge nicht transparent erscheinen. Hierdurch ist es möglich, in dem Bereich 12 die Leitfähigkeit der Verbindungsbereiche 43 zu erhöhen, auf Kosten der Transparenz, die jedoch in diesem Bereich nicht mehr von Relevanz ist.

Kontaktbereiche können hierbei von den Kontaktfeldern 21 des Kontaktverbinders 20 ausgebildet werden, es ist jedoch auch möglich, dass ein Kontaktbereich einen Bereich darstellt, in dem die erste elektrisch leitfähige Schicht 31, beispielsweise über ein Via, mit einer anderen elektrisch leitfähigen Schicht kontaktiert wird, oder kann auch von einem Bereich der ersten elektrisch leitfähigen Schicht 31 ausgebildet werden, in dem eine (für den menschlichen Betrachter opak erscheinende) Verbindungsbahn der elektrisch leitfähigen Schicht 31 in einen (für den menschlichen Betrachter transparent erscheinenden) Verbindungsbereich übergeht.

Wie in Fig. 1 angedeutet sind in der ersten elektrisch leitfähigen Schicht 31 auch die Kontaktfelder 21 des Kontaktverbinders 30 ausgebildet. Es ist jedoch auch möglich, dass die Kontaktfelder 21 nicht in der elektrisch leitfähigen Schicht 31, sondern in einer anderen elektrisch leitfähigen Schicht, beispielsweise in der elektrisch leitfähigen Schicht 33 ausgebildet sind. Im Bereich der Kontaktfelder 31 kann hierbei die erste elektrisch leitfähige Schicht 31 über eine größere Schichtdicke verfügen oder auch mit einem anderen oder dem gleichen elektrisch leitfähigen Material nachverstärkt sein.

Auf der ersten elektrisch leitfähigen Schicht 31 wird sodann die dielektrische Schicht 32 aufgebracht. Bei der dielektrischen Schicht 32 handelt es sich vorzugsweise um einen transparenten Lack, der mittels eines Druckverfahrens in einer Schichtstärke von 1 µm bis 40 µm auf die elektrisch leitfähige Schicht 31 aufgebracht wird. Hierbei ist es vorteilhaft, wenn bereits beim Aufbringen der dielektrischen Schicht 32 in den Bereichen, in den später Vias 35 vorzusehen sind, kein Material aufgebracht wird.

Weiter wird sodann die elektrisch leitfähige Schicht 33 aufgebracht. Bei der zweiten elektrisch leitfähigen Schicht 33 handelt es sich vorzugsweise um eine Schicht, welche mittels Druckens eines elektrisch leitfähigen Druckstoffes, beispielsweise Carbonblack oder Leitsilber aufgebracht ist. Hierbei können beim Aufdrucken gleichzeitig die in der dielektrischen Schicht 32 vorgesehenen Ausnehmungen mit dem Druckstoff befüllt werden und so gleichzeitig die Vias 35 durch die dielektrische Schicht 32 mit leitfähigem Material befüllt werden. Die leitfähige Schicht 33 ist vorzugsweise so strukturiert, dass mittels dieser Schicht mehrere der Verbindungsbereiche 43 der elektrisch leitfähigen Schicht 31 miteinander elektrisch verbunden werden und so die Anzahl der Kontaktfelder 21 des Kontaktverbinders 20 reduziert werden kann, wie dies später auch noch detailliert beschrieben wird.

Vorzugsweise sind in dem Bereich 11 neben der elektrisch leitfähigen Schicht 31 keine weiteren elektrisch leitfähigen Schichten mehr in dem Mehrschichtkörper 1 vorgesehen.

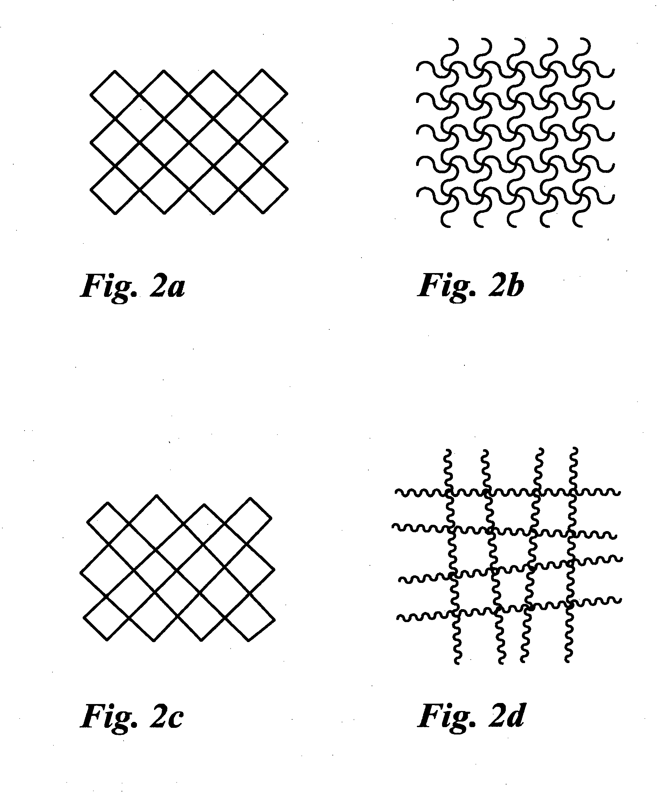

Die leitfähigen Bahnen 40 in den Sendebereichen, Empfangsbereichen und Verbindungsbereichen sind bevorzugt gemäß einem der in den Figuren Fig. 2a bis Fig. 2d verdeutlichten Muster angeordnet. Wie dort gezeigt, sind die elektrisch leitfähigen Bahnen 40 hierbei zur Vermeidung von Beugungs- und Moire-Effekten möglichst nicht parallel zueinander angeordnet und weisen weiter eine Vielzahl von Kreuzungspunkten auf, um so möglichst eine gleichmäßige Flächenleitfähigkeit in den Sendebereichen 41, Empfangsbereichen 42 und Verbindungsbereichen 43 bereitzustellen.

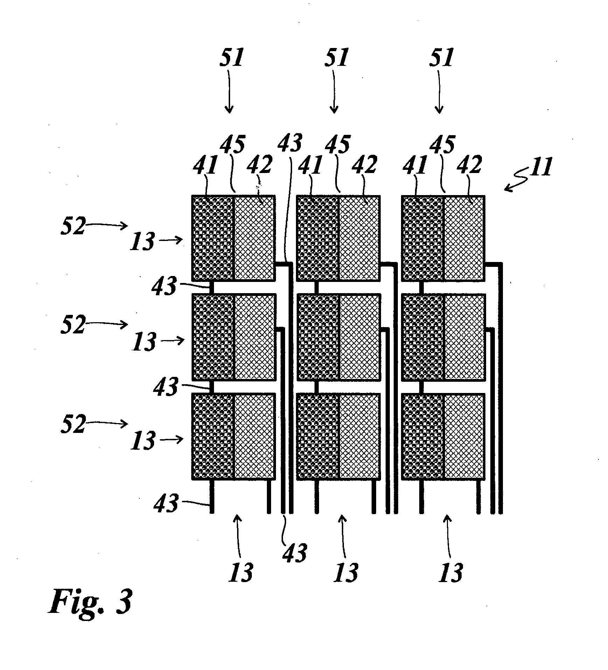

Die in dem Bereich 11 angeordneten Touchfelder sind vorzugsweise gemäß einer 2-dimensionalen Matrix mit zwei oder mehr Spalten und zwei oder mehr Zeilen angeordnet, wie dies anhand von Fig. 3 verdeutlicht ist.

Fig. 3 zeigt einen Ausschnitt aus dem Bereich 11 mit neun Touchfeldern 13, die in Form einer Matrix mit drei Zeilen 53 und drei Spalten 51 angeordnet sind. Jedes Touchfeld 3 weist hierbei einen der elektrisch leitfähigen Sendebereiche 41 und einen der elektrisch leitfähigen Empfangsbereiche 42 auf, die in der ersten elektrisch leitfähigen Schicht 31, wie oben erläutert, ausgeformt sind. In Fig. 3 ist hierbei eine Anordnung gezeigt, bei der in der linken Hälfte jedes der Touchfelder 13 ein Sendebereich 51 und der rechten Hälfte ein Empfangsbereich 42 vorgesehen ist und hierbei der Sendebereich 41 von dem Empfangsbereich 42 durch einen Spalt 45 galvanisch getrennt ist. Die Breite des Spalts 45 beträgt vorzugsweise zwischen 5 µm und 1000 µm, weiter bevorzugt zwischen 10 µm und 500 µm. Die Länge des Spalts beträgt vorzugsweise 2 mm bis 16 mm und weiter bevorzugt zwischen 4 mm und 8 mm. Die Sendebereiche 41 und 42 haben in der Darstellung nach Fig. 3 eine rechteckförmige Formgebung. Sie können jedoch auch eine andere Formgebung, beispielsweise eine dreieckförmige Formgebung, eine Formgebung eines anderen Vielecks oder auch eines Teilbereichs eines Kegelschnitts besitzen: Weiter sind in Fig. 3 mehrere Verbindungsbereiche 43 gezeigt, welche Sendebereiche und Empfangsbereiche mit außerhalb des Bereichs 11 angeordneten Kontaktbereichen verbinden.

Wie in Fig. 3 gezeigt, ist es bei einer derartigen Anordnung von Sendebereichen 41 und Empfangsbereichen 42 hierbei notwendig zwölf Verbindungsbereiche 43 vorzusehen, um sämtliche der Sendebereiche 41 und Empfangsbereiche 42 so zu kontaktieren, dass diese einzeln ansteuerbar sind.

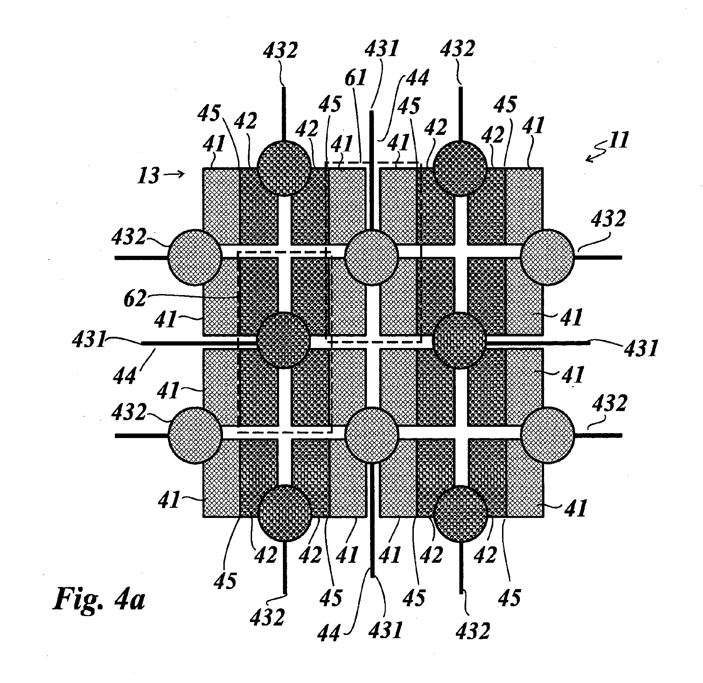

Fig. 4a zeigt nun eine weitere Anordnung von Sendebereichen 41 und Empfangsbereichen 42 in dem Bereich 11, welche deutliche Vorteile gegenüber der in Fig. 3 gezeigten Anordnung aufweist.

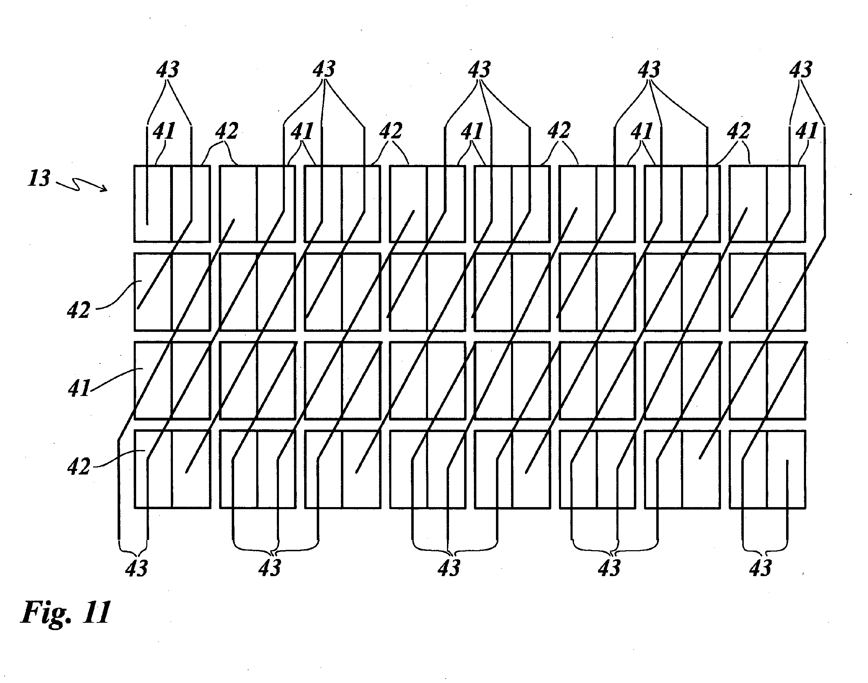

Fig. 11 a zeigt so eine 4 x 4 Matrix von Touchfeldern 30, die jeweils einen Sendebereich 41 und einen Empfangsbereich 42 aufweisen, die wie anhand von Fig. 3 erläutert durch einen Spalt voneinander getrennt sind. Bezüglich der möglichen Ausformung der Sendebereiche 41 und Empfangsbereiche 42 wird auf die Ausführungen nach Fig. 3 verwiesen. Weiter zeigt Fig. 4a auch eine Vielzahl von Verbindungsbereichen 431 und 432, die jeweils zwei oder mehr der Sendebereiche 41 oder zwei oder mehr der Empfangsbereiche 42 miteinander und mit einem außerhalb des Bereichs 11 angeordneten Kontaktbereich elektrisch verbinden. Die Verbindung von zwei oder mehreren Sendebereichen 41 oder Empfangsbereichen 42 ist hierbei in Fig. 4a schematisch durch einen Punkt angedeutet. Die Verbindungsbereiche 431 verbinden hierbei jeweils vier Sendebereiche 41 oder vier Empfangsbereiche 42 und die Verbindungsbereiche 432 verbinden jeweils zwei Sendebereiche 41 oder zwei Empfangsbereiche 42.

Dieser vorteilhaften Kopplung von zwei oder mehr der Sendebereiche 41 und/oder Empfangsbereiche 42 wird hierbei insbesondere dadurch erzielt, dass in den Zeilen von Touchfeld 13 zu Touchfeld 13 die Anordnung von Sendebereichen 41 und Empfangsbereichen 42 zueinander alterniert.

So liegen sich an den Grenzen zwischen zwei Touchfeldern 13 einer Zeile jeweils zwei Sendebereiche 41 oder zwei Empfangsbereiche 42 gegenüber und können so durch einen gemeinsamen Anschlussbereich 43 miteinander und mit einem Kontaktbereich elektrisch leitend verbunden werden.

Die Touchfelder 13 der Matrix werden so bevorzugt aus zwei Gruppen von Touchfeldern 13 ausgewählt, wobei bei einer ersten Gruppen von Touchfeldern 13 der Sendebereich 41 jeweils Links und insbesondere in der linken Hälfte und der Empfangsbereich 42 Rechts und insbesondere in der rechten Hälfte des jeweiligen Touchfeldes 13 angeordnet ist und bei den Touchfeldern 13 einer zweiten Gruppe von Touchfeldern der Sendebereich 41 jeweils Rechts und insbesondere in der rechten Hälfte und der Empfangsbereich 42 Links und insbesondere in der linken Hälfte des jeweiligen Touchfeldes 13 angeordnet ist. In ein oder mehreren bevorzugten jeder der Zeilen der Matrix werden im Folgenden alternierende Felder der ersten Gruppe und der zweiten Gruppe nebeneinander angeordnet, wie dies in Fig. 4a gezeigt ist, sodass sich an den Grenzen zwischen zwei Touchfeldern 13 derselben Zeile jeweils zwei Sendebereiche 41 oder zwei Empfangsbereiche 42 gegenüberliegen.

Weiter ist es auch möglich, dass in ein oder mehreren oder jeder der Spalten eine derart alternierende Anordnung von Touchfeldern der ersten Gruppe und der zweiten Gruppe vorgesehen wird, wie dies auch später erläutert wird.

Bei der Anordnung gemäß Fig. 4a ist weiter noch in vorteilhafter Weise vorgesehen, dass in jeder der Spalten jeweils Touchfelder der gleichen Gruppe von Touchfeldern angeordnet sind, d. h. in jeder der Spalten sich jeweils an der Grenze zwischen zwei Touchfeldern 13 der Spalten die Sendebereiche 41 und die Empfangsbereiche 42 gegenüber liegen, wie dies in Fig. 4a gezeigt ist. Auch hierdurch wird es ermöglicht, wie dies in Fig. 4a gezeigt ist, benachbart angeordnete Empfangsbereiche 41 bzw. Sendebereiche 42 in vorteilhafter Weise mit Verbindungsbereichen 43 zu verbinden.

Wie dies in Fig. 4a gezeigt ist, wird es durch eine derartige Anordnung ermöglicht, jeweils vier Sendebereiche und / oder vier Empfangsbereiche mittels eines gemeinsamen Verbindungsbereich 431 zu kontaktieren. Derartige vier benachbarte zueinander angeordnete Sendebereiche bilden weiter eine Sendegruppe 61 und derartige vier benachbart angeordnete Empfangsbereiche eine Empfangsgruppe 62 aus, welche in Fig. 4a durch entsprechende gestrichelte Linien angedeutet sind. Wie aus der Darstellung nach Fig. 4a entnehmbar ist, sind so vorteilhafterweise ein oder mehrere solcher Sendegruppen 61 oder Empfangsgruppen 62 in Spaltenrichtung angeordnet und in Zeilenrichtung wechseln Sendegruppen 61 und Empfangsgruppen 62 alternierend ab. Die Sendegruppen 61 und Empfangsgruppen 62 sind so schachbrettartig zueinander versetzt, wobei die Flächenschwerpunkte der benachbarten, in Spaltenrichtung aufeinanderfolgenden Anordnung von Sendegruppen oder Empfangsgruppen zueinander um eine halbe Periode verschoben sind.

Weiter ist es vorteilhaft, wenn die Verbindungsbereiche 43 in Bezug auf den Bereich 11 von Innen nach Außen verlaufende Leiterbahnabschnitte 44 aufweisen, die vorzugsweise im Grenzbereich zwischen zwei Spalten oder zwei Zeilen der Matrix verlaufen. Vorteilhaft ist es hierbei weiter, wenn diese Leiterbahnabschnitte, wie dies in Fig. 4a für die Leiterbahnabschnitte 44 der Verbindungsbereiche 431 gezeigt ist, nach allen Seiten von Innen nach Außen verlaufen und damit eine sternförmige Anordnung aufweisen. Hierdurch ist es möglich, die Weglänge der Verbindungsbereiche deutlich zu reduzieren und Leiterbahnkreuze zu vermeiden.

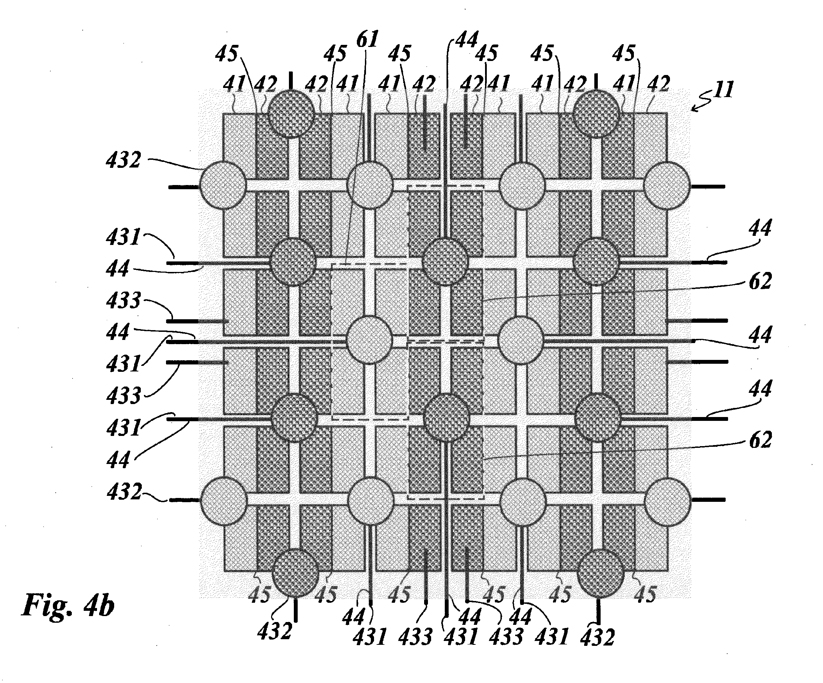

Fig. 4b zeigt eine weitere Ausführungsform der Anordnung von Touchfeldern 13 innerhalb des Bereichs 11, welche dem gleichen Konstruktionsprinzip wie der Anordnung nach Fig. 4a folgt.

Bei der Anordnung nach Fig. 4b handelt es sich um eine Matrix mit 6 x 6 Touchfeldern 13. Jedes der Touchfelder 13 weist einen Sendebereich 41 und einen Empfangsbereich 42 auf. Die Anordnung der Sende- und Empfangsbereiche 41 und 42 alterniert hier in jeder Zeile und ist in jeder Spalte konstant, entsprechend dem Anordnungsprinzip nach Fig. 4a. Auch hier werden jeweils benachbart angeordnete Sendebereiche 41 und Empfangsbereiche 42 zu Sendegruppen 61 bzw. Empfangsgruppen 62 zusammengefasst, welche in einer schachbrettartigen Anordnung vorgesehen sind. Diese Sendegruppen 61 und Empfangsgruppen 62 sind hierbei durch Verbindungsbereiche 431 kontaktiert. Weiter sind Sende- und Empfangsgruppen, die jeweils nur aus zwei Sendebereichen 41 bzw. Empfangsbereiche 42 gebildet sind, durch Verbindungsbereiche 432 kontaktiert. Sendebereiche 41 und Empfangsbereiche 42, die jeweils über einen eigenen Verbindungsbereich miteinander kontaktiert sind, werden von den Verbindungsbereichen 433 gebildet. Auch hier ist die sternförmige Anordnung der Leiterbahnabschnitte 44 der Verbindungsbereiche gut erkennbar.

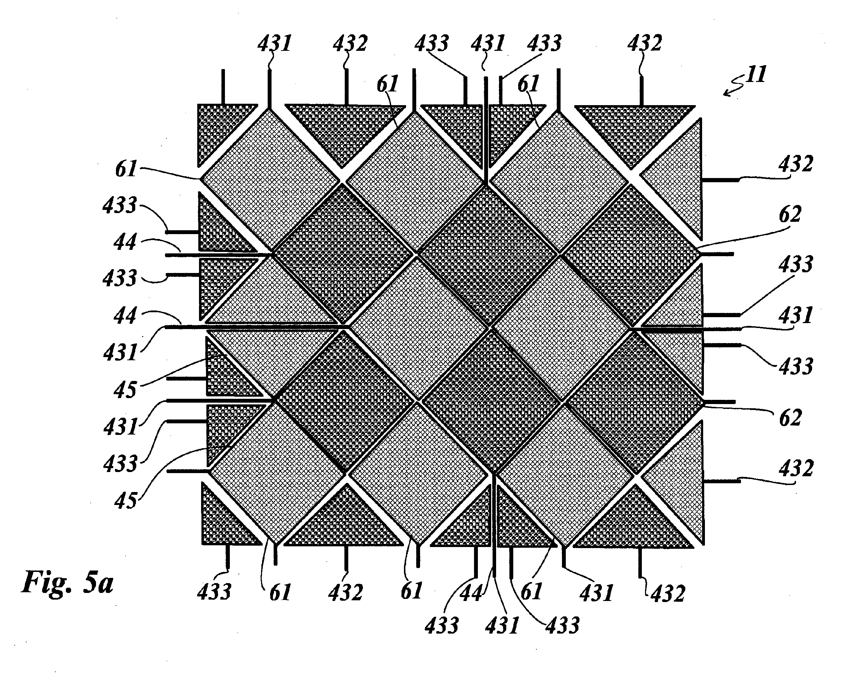

Fig. 5a zeigt eine weitere Anordnung von Sendebereichen und Empfangsbereichen innerhalb des Bereichs 11.

Diese Anordnung basiert hier prinzipiell auf demselben Konstruktionsprinzip, wie die Anordnung nach Fig. 4a und Fig. 4b. Hierbei sind zum Einen jeweils vier benachbart angeordnete Sendebereiche bzw. Empfangsbereiche zu einer Sendegruppe 61 bzw. Empfangsgruppen 62 zusammengefasst und diese Sendegruppen 61 und Empfangsgruppen 62 sind, wie in Fig. 5a angeordnet, schachbrettartig zueinander versetzt zueinander angeordnet. Die Empfangsbereiche und Sendebereiche, die jeweils zu einer Sendegruppe bzw. Empfangsgruppe zusammengefasst sind, sind hierbei so angeordnet, dass sie unmittelbar aneinander stoßen bzw. durch einen gemeinsamen Verbindungsbereich zu einer gemeinsamen geometrischen Figur, hier einem Quadrat, verbunden sind. Insgesamt sind hier so jeweils zwei oder vier benachbart angeordnete Sende- oder Empfangsbereiche zu einem gemeinsamen elektrisch leitfähigen Bereich verbunden, der eine quadratische oder dreieckige Ausformung besitzt. Diese Bereiche können jedoch auch eine rechteckförmige oder achteckförmige Formgebung besitzen.

Im Weiteren ist bei der Anordnung nach Fig. 5a noch die Orientierungsrichtung der Spalten und Zeilen der Matrix um einen 45°-Winkel gegenüber dem Bereich 11 verkippt.

Die im Inne von liegenden Sendegruppen 61 und Empfangsgruppen 62 sind weiter, wie in Fig. 5a gezeigt, durch Verbindungsbereiche 431 kontaktiert. Weiter sind noch Verbindungsbereiche 432 vorgesehen, welche jeweils Sendegruppen oder Empfangsgruppen kontaktieren, welche von zwei Empfangsbereichen bzw. zwei Sendebereichen gebildet werden. Weiter sind noch Verbindungsbereiche 433 vorgesehen, welche jeweils nur einen Empfangsbereich bzw. Sendebereich kontaktieren. Wie sich hieraus auch ergibt, besitzen bei der Ausführung gemäß Fig. 5a die Sendebereiche und Empfangsbereiche an sich eine dreiecksförmige Formgebung und können somit in einfacher Weise zu einer gemeinsamen Sendegruppe oder Empfangsgruppe vereinigt werden.

Wie in Fig. 5a gezeigt, weisen auch bei der Anordnung nach Fig. 5a Verbindungsbereiche Leiterbahnabschnitte 44 auf, welche sternförmig nach allen Seiten nach außen verlaufen. Diese Verbindungsbereiche zerschneiden dann jeweils eine "virtuelle" Sendegruppe bzw. Empfangsgruppe mit vier bzw. zwei Sendebereichen oder Empfangsbereichen, sodass diese Sende- bzw. Empfangsgruppen in zwei Teile zerfällt, welche jeweils einzeln kontaktiert werden.

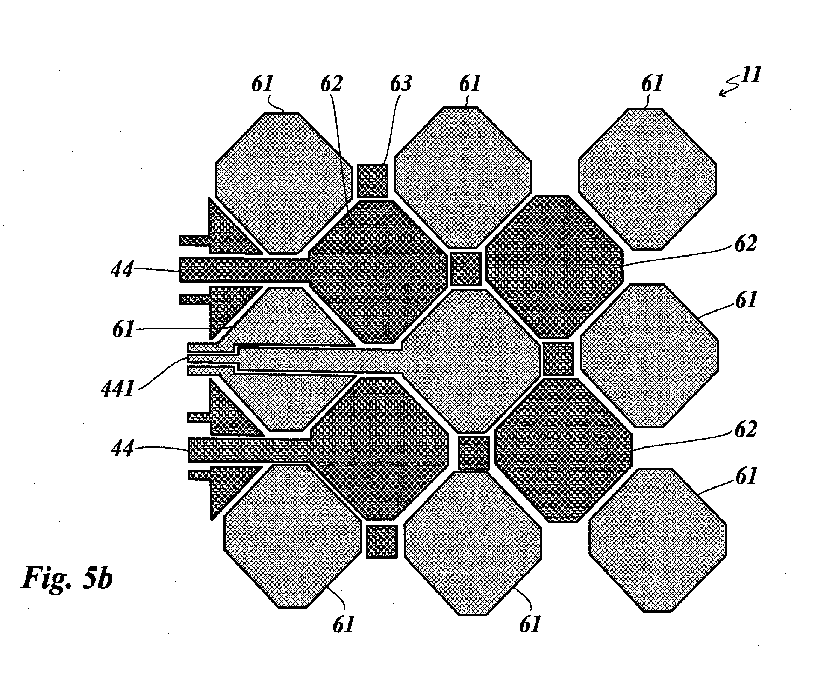

Fig. 5b zeigt einen Ausschnitt des Bereichs 11, in dem eine Ausführungsvariante der Anordnung nach Fig. 5a realisiert ist. Auch diese Anordnung weist eine schachbrettartig versetzte Anordnung von Sendegruppen 61 und Empfangsgruppen 62 auf, mit zugeordneten Leiterbahnabschnitten 44 und 441. Wie in Fig. 5b gezeigt, sind die Ecken der Sendegruppen 61 und Empfangsgruppen 62 geometrisch gekürzt, sodass die Sendegruppen 61 und Empfangsgruppen 62 eine achteckförmige Formgebung besitzen. Hierdurch wird mehr Platz für die nach Außen geführten Verbindungsbereiche geschaffen, sodass diese redundant ausgeführt werden können (z. B. 3-Strichkontengitter statt 2-Strichkontengitter). Dies beeinflusst die elektrische Funktion nicht, erhöht aber die Produktions-Ausbeute. Um eine gleichmäßige Empfindlichkeit und eine optische Homogenität zu ermöglichen, können in den Zwischenräumen, durch die keine Verbindungsbereiche geführt sind, nicht-angeschlossene elektrisch leitfähige Bereiche 63 platziert werden.

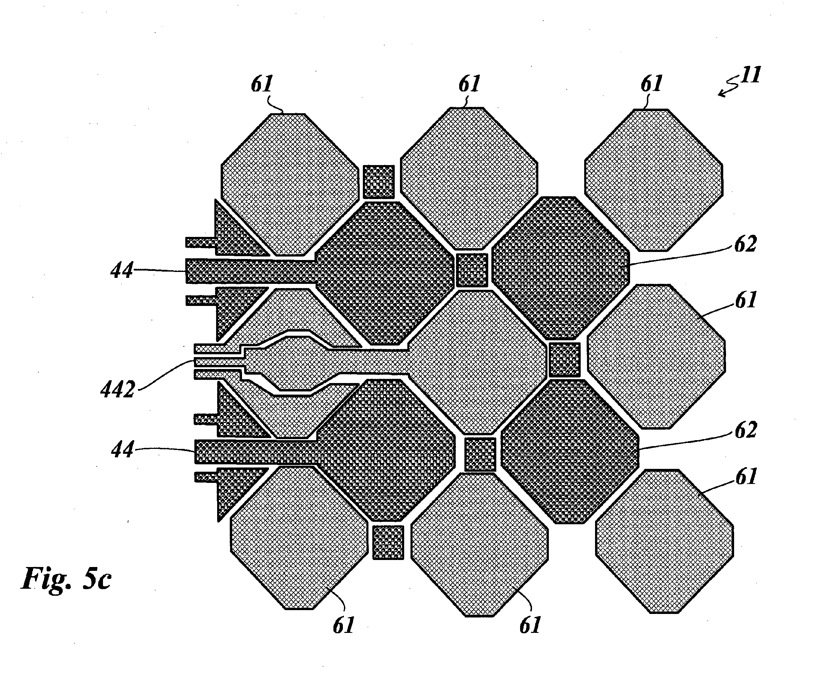

Fig. 5c zeigt eine weitere Variation der Anordnung gemäß Fig. 5b. Wie in Fig. 5c gezeigt, sind innenliegende Sendegruppen 61 und Empfangsgruppen 62 über Leiterbahnabschnitte 44 von Verbindungsbereichen 43 kontaktiert. Diese Leiterbahnabschnitte zerteilen (virtuelle) Sendegruppen und Empfangsgruppen, wie dies bereits anhand von Fig. 5a erläutert worden ist. Wie in Fig. 5c anhand des Leiterbahnabschnitts 442 gezeigt, ist hier bei ein oder mehreren dieser Leiterbahnabschnitte eine Verbreiterung in dem Bereich angeordnet, in welchem diese diese (virtuellen) Sendegruppen bzw. Empfangsgruppen zerteilen. Dies erhöht ebenfalls die Produktions-Ausbeute und ändert die elektrische Funktion der Touchfelder 13 nicht, da die Erkennung im Wesentlichen an den Berührungskanten zwischen Sendebereichen und Empfangsbereichen stattfindet.

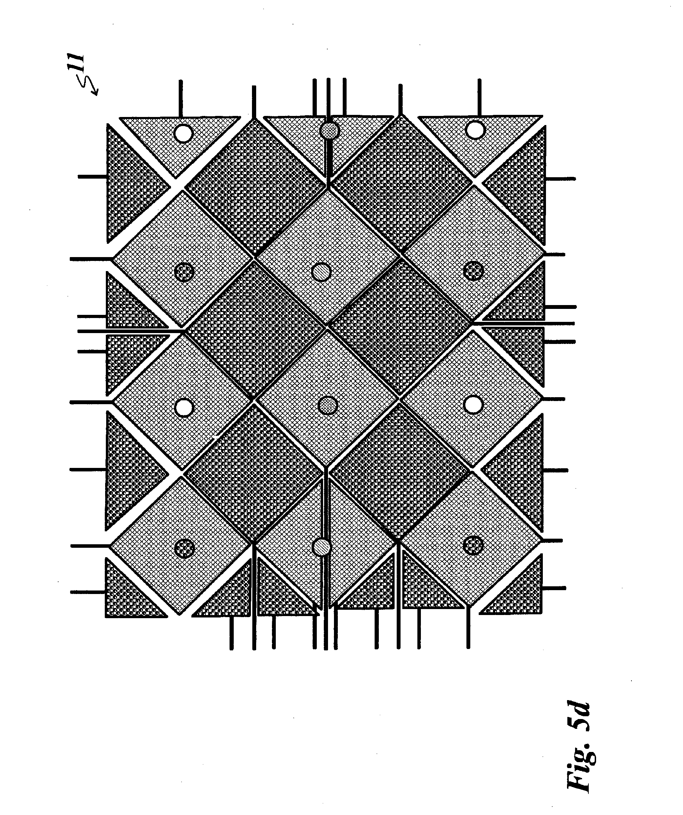

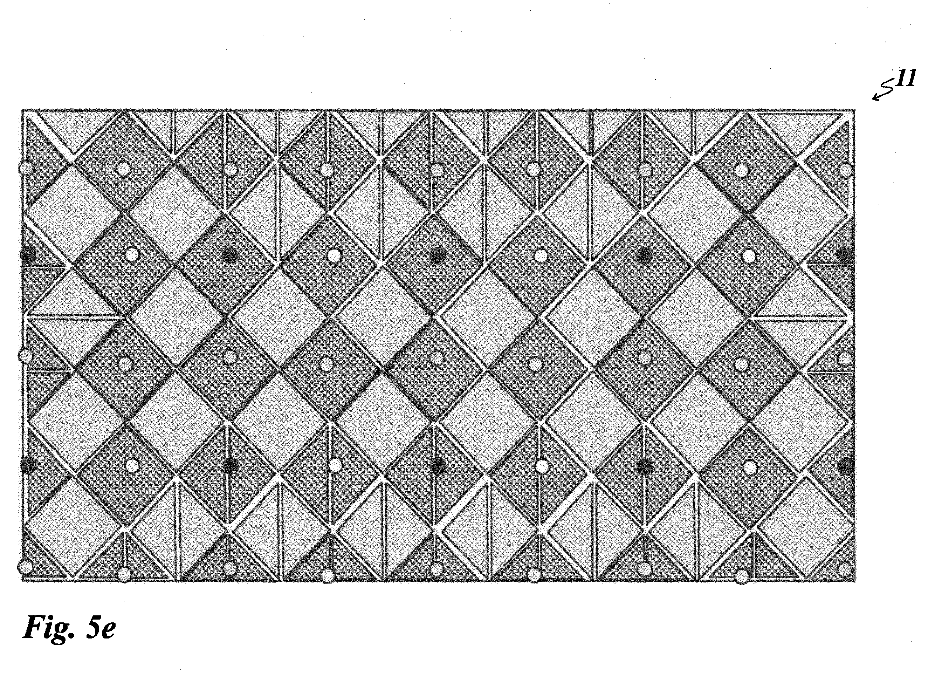

Die Figuren Fig. 5d und Fig. 5e zeigen einen Ausschnitt des Bereichs 11, in denen eine Matrix mit 6 x 7 Touchfeldern 13 bzw. mit 9 x 16 Touchfeldern 13 angeordnet ist. Die Anordnung der Sendebereiche und Empfangsbereiche ist hierbei gemäß dem Konstruktionsprinzip nach Fig. 5a durchgeführt, sodass bzgl. auf die jeweiligen Ausführungen nach Fig. 5a verwiesen wird.

Wie aus diesen Darstellungen ersichtlich ist, ist die Gruppierung von Sendebereichen und Empfangsbereichen zu Sendegruppen bzw. Empfangsgruppen hierbei primär so ausgeführt, dass zu jeder Empfangsgruppe jeweils vier Sendegruppen benachbarte sind, welche jeweils über einen eigenen Verbindungsbereich kontaktiert sind oder umgekehrt. Dies ist in den Figuren Fig. 5d und Fig. 5e durch einen Punkt angedeutet, durch welchen die unterschiedlichen Sendegruppen gekennzeichnet sind.

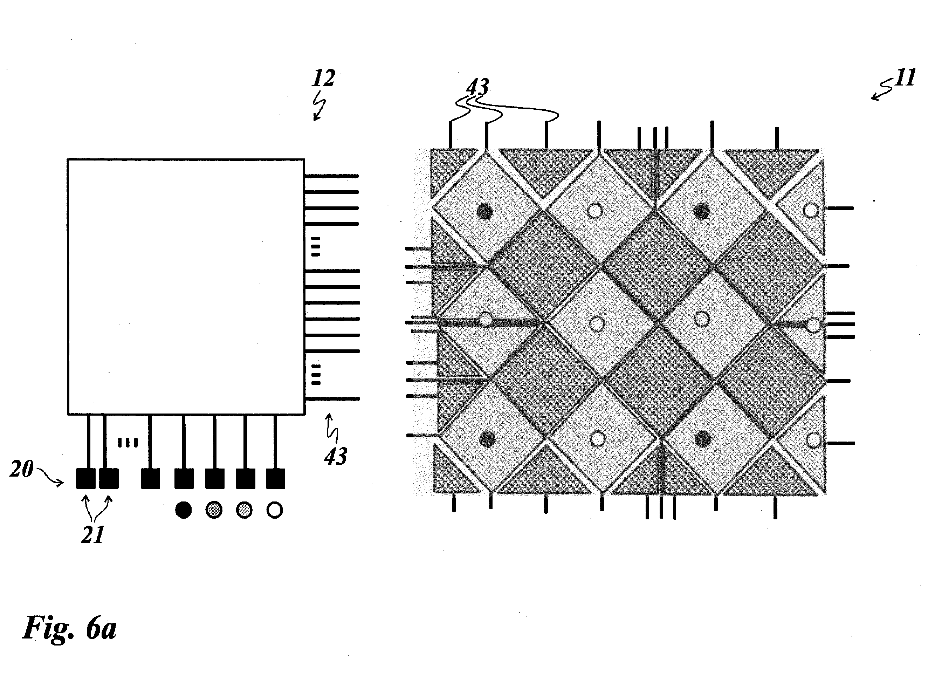

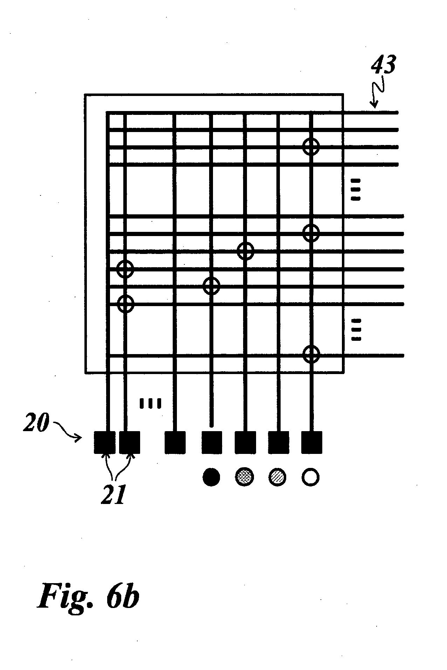

Die Zusammenführung von aus dem Bereich 11 geführten Verbindungsbereichen 43 zu den Kontaktflächen 21 des Kontaktverbinders 20 ist beispielhaft in den Figuren Fig. 6a und Fig. 6b gezeigt.

Fig. 6a zeigt hierbei zum einen den Bereich 11 mit einer entsprechenden Fig. 5a ausgebildeten Anordnung von Sendebereichen und Empfangsbereichen, die jeweils zu Sendegruppen und Empfangsgruppen zusammengefasst sind. Die Sendegruppen sind hierbei durch Punkte gekennzeichnet. Die aus dem Bereich 11 geführten Verbindungsbereiche 43 werden im Bereich 11 sodann mittels der in Fig. 6 gezeigten Kopplungsmatrix mit den Kontaktfeldern 21 des Kontaktverbinders 20 elektrisch leitend verbunden. Diese Kopplung erfolgt hierbei vorzugsweise über die zweite elektrisch leitfähige Schicht 33 und kann so beispielsweise durch Aufdrucken einer strukturierten Isolatorschicht, der dielektrischen Schicht 32, und dem Aufdruck von Leiterbahnen als elektrisch leitfähige Schicht 33, beispielsweise mittels des Aufdruckens von Leitsilber erfolgen.

Durch die Ausbildung des Mehrschichtkörpers 1 gemäß den Figuren Fig. 1a bis Fig. 2d und Fig. 4a bis Fig. 6b ist es so möglich, die Zahl der Verbindungsbereiche, die Länge der Verbindungsbereiche und die Flächenbelegung der Verbindungsbereiche im Bereich 11 drastisch zu reduzieren, und nur eine Leiterbahnebene im sichtbaren Bereich, d. h. im Bereich 11 vorzusehen, und deshalb optische Probleme einer Wechselwirkung von zwei Leiterbahnebenen (Moire-Effekte) zu vermeiden. Weiter ergibt sich das Vorurteil, dass aus dem Bereich 11 nach außen geführte Verbindungsbahnabschnitte von Verbindungsbereichen nicht geschützt werden müssen, da keine Verbindungsbereiche von Sendebereichen 41 und Empfangsbereichen 42 nebeneinander liegen.

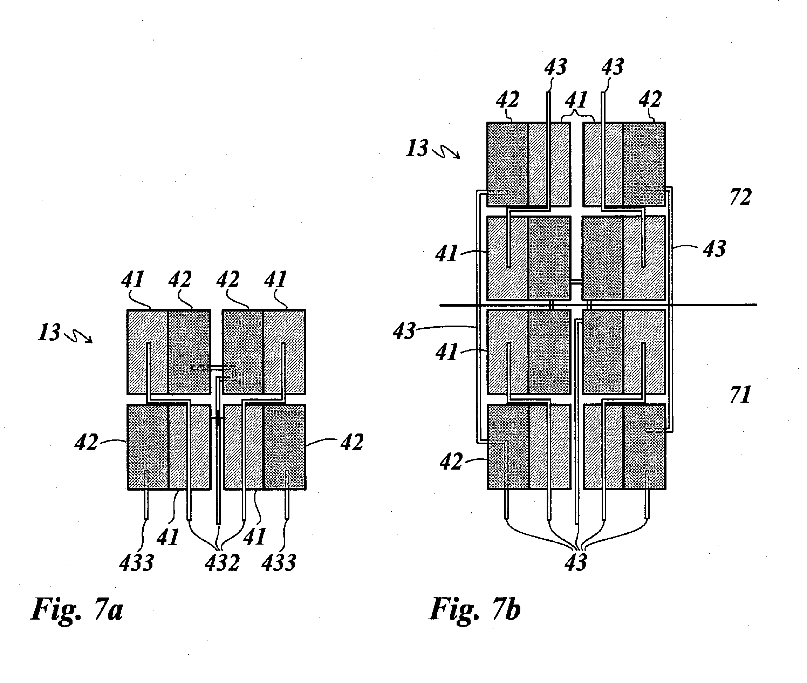

Ähnliche Vorteile lassen sich weiter bei einer Ausbildung der Anordnung von Sendebereichen 41 und Empfangsbereichen 42 nach einem der folgenden Ausführungsvarianten gemäß der Figuren Fig. 7a bis Fig. 12c erzielen.

Fig. 7a zeigt eine Anordnung von Sendebereichen 41 und Empfangsbereichen 42 einer Matrix mit 2 x 2 Touchfeldern 13. Wie in Fig. 7a gezeigt, folgen hier in den Zeilen der Matrix Touchfelder 13 aufeinander, welche eine inverse Anordnung von Sendebereichen 41 und Empfangsbereichen 42 aufweisen, sodass an der Grenze zwischen zwei aufeinanderfolgenden Touchfeldern einer Zeile jeweils zwei Sendebereiche 41 oder zwei Empfangsbereiche 43 aufeinanderfolgen. Weiter folgen auch in jeder Spalte jeweils Touchfelder 13 mit einer inversen Anordnung von Sendebereichen 41 und Empfangsbereichen 42 aufeinander, sodass an der Grenze zwischen zwei Tochfeldern 13 einer Spalte sich jeweils ein Sendebereich 41 und ein Empfangsbereich 42 oder einem Empfangsbereich 42 und ein Sendebereich 41 gegenüberliegt, wie dies in Fig. 7a gezeigt ist.

Damit folgen sowohl in den Zeilen, als auch in den Spalten alternierend Touchfelder 13 der ersten Gruppe und zweiten Gruppe aufeinander.

In den Zwischenräumen zwischen zwei Touchfeldern 13 derselben Zeile liegen sich so jeweils zwei Sendebereiche 41 oder zwei Empfangsbereiche 42 gegenüber und an der Grenze zwischen den zwei Touchfeldern 13 derselben Spalte stehen sich jeweils Sendebereiche 41 und Empfangsbereiche 42 gegenüber.

Die Sendebereiche 41 und Empfangsbereiche 42 werden weiter hier bevorzugt so durch Verbindungsbereiche 43 miteinander elektrisch verbunden, dass mindestens x/2 Sendebereiche oder x/2 Empfangsbereiche miteinander verbunden sind, wobei x die Anzahl der Zeilen (bei ungerader Anzahl abgerundet) bedeutet.

Weiter sind bevorzugt Verbindungsbereiche 43 vorgesehen, die doppelkammförmig aus der Matrix herausgeführt werden, sodass keine Kreuzung von Leiterbahnabschnitten der Verbindungsbereiche entstehen. Bei weniger als 5 Zeilen ist noch kein Doppelkamm nötig.

Weiter ist bevorzugt, wenn die Empfangsbereiche 41 oder die Sendebereiche 42 entlang des Kamm-Rückens bzw. Doppel-Kamm-Rückens miteinander elektrisch über den Verbindungsbereichen 43 verbunden werden.

Fig. 7a zeigt so zum Einen Verbindungsbereiche 432, welche jeweils zwei Sendebereiche 41 oder zwei Empfangsbereiche 42 elektrisch miteinander verbinden, sowie Verbindungsbereiche 433, welche jeweils einen Sendebereich 41 bzw. einen Empfangsbereich 42 mit einem entsprechenden Kontaktbereich verbindet.

Wie in Fig. 7a gezeigt, sind hierbei zwei der Verbindungsbereiche 432 so ausgebildet, dass sie die Sendebereiche der jeweiligen Spalte miteinander verbinden und einer der Verbindungsbereiche 432 so ausgebildet, dass er zwei gegenüberliegende Empfangsbereiche 42 einer Zeile miteinander elektrisch verbindet.

Fig. 7b zeigt eine Matrix mit 4 x 2 Touchfeldern 13. Die Matrix besteht hierbei aus zwei Teilbereichen 71 und 72. Jeder der Teilbereiche 71 und 72 folgt hierbei dem Konstruktionsprinzip gemäß Fig. 7a bezüglich der Anordnung der Sendebereiche 41 und Empfangsbereiche 42 der Touchfelder 13, wie dies aus Fig. 7b auch ersichtlich ist. Auch hier sind in jedem der Teilbereiche 71 und 72 Verbindungsbereiche 43 vorgesehen, welche jeweils die Sendebereiche 41 einer Spalte elektrisch miteinander verbinden. Weiter ist ein Verbindungsbereich 42 vorgesehen, welche vier aneinander angrenzende Empfangsbereiche 42 miteinander elektrisch leitend verbindet.

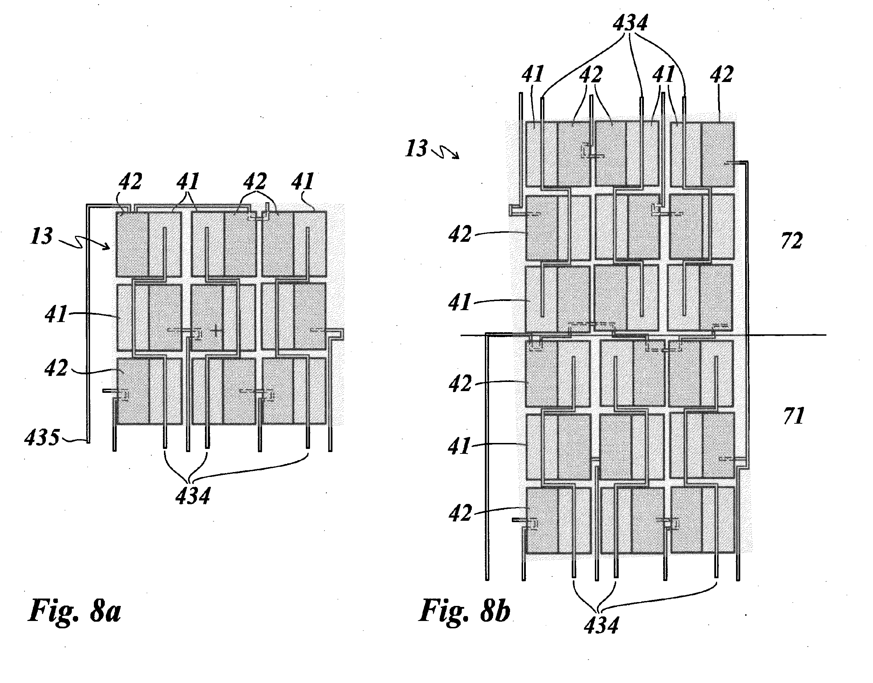

Fig. 8a zeigt eine Matrix mit 3 x 3 Touchfeldern 13. Die Anordnung der Sendebereiche 41 und Empfangsbereiche 42 der Matrix folgt hierbei dem anhand von Fig. 7a erläuterten Funktionsprinzip. Auch hier sind Verbindungsbereiche 434 vorgesehen, welche jeweils die Sendebereiche 41 einer Spalte elektrisch miteinander verbinden, sodass hier drei Sendebereiche 41 miteinander verbunden sind.

Fig. 8b zeigt eine Matrix mit 6 x 3 Touchfeldern 13. Diese Matrix besteht aus zwei Teilbereichen 71 und 72, wobei beide Teilbereiche 71 und 72 dem Konstruktionsprinzip nach Fig. 8a folgen, insbesondere bezüglich der Anordnung der Empfangsbereiche 41 und Empfangsbereiche 42 der Touchfelder 13 zueinander sowie bezüglich der Ausbildung von Verbindungsbereichen 434, die jeweils sämtliche Sendebereiche 41 einer Spalte des jeweiligen Teilbereichs miteinander elektrisch verbinden.

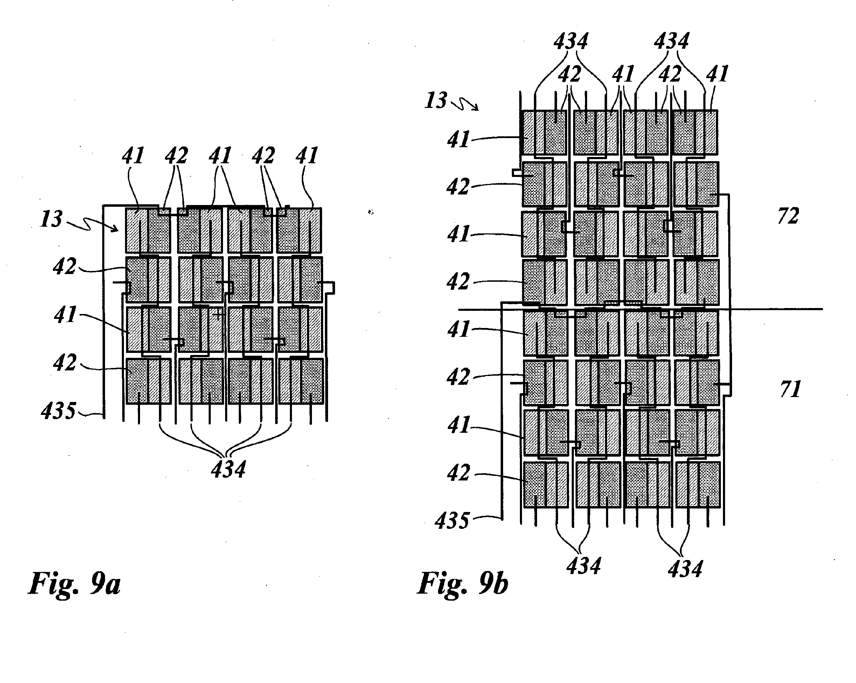

Fig. 9a und Fig. 9b zeigen eine Matrix mit 4 x 4 Touchfeldern 13, bzw. eine Matrix mit 8 x 4 Touchfeldern 13. Die Anordnung der Sendebereiche 41 und Empfangsbereiche 42 sowie die Ausbildung der Verbindungsbereiche 443 folgt hierbei den anhand der Figuren Fig. 8a und Fig. 8b verdeutlichten Konstruktionsprinzipien, sodass auf die diesbezüglichen Ausführungen nach Fig. 7a bis Fig. 8b verwiesen wird. Von Vorteil ist hierbei noch, dass sämtliche Empfangsbereiche 42 der obersten Zeile der Anordnung nach Fig. 9a über einen gemeinsamen Verbindungsbereich 435 miteinander kontaktiert sind.

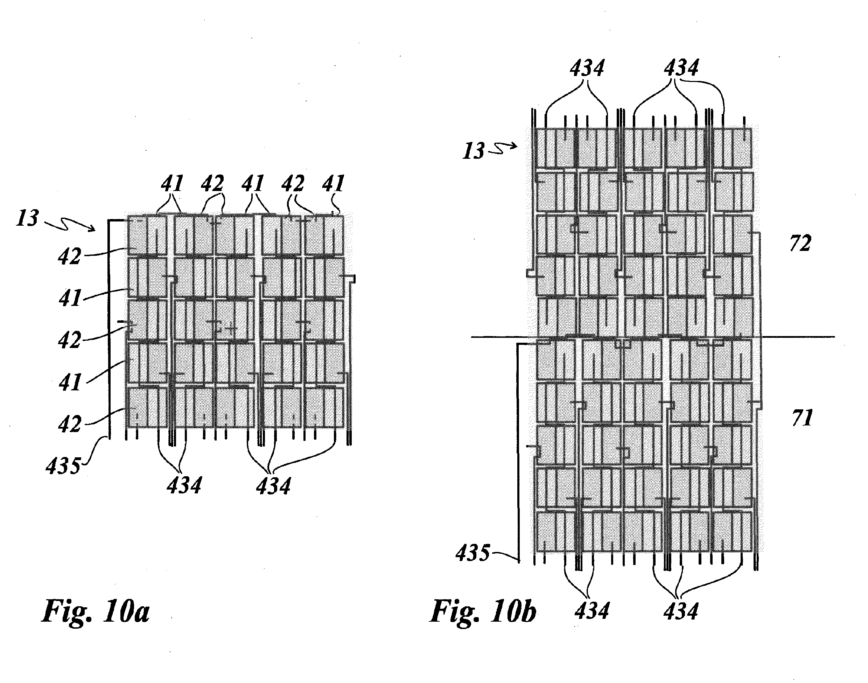

Fig. 10a und Fig. 10b zeigen eine Matrix mit 5 x 5 Touchfeldern 13 bzw. 10 x 5 Touchfeldern 13. Die Anordnung der Sendebereiche 41 und Empfangsbereiche 42 sowie der Verbindungsbereiche 434 und 435 entspricht hierbei den vorhergehend erläuterten Konstruktionsprinzipien, sodass diesbezüglich auf die Ausführungen nach Fig. 7a bis Fig. 9b verwiesen wird.

Fig. 11 zeigt eine Matrix mit 4 x 8 Touchfeldern 13. Die Anordnung der Sendebereiche 41 und Empfangsbereiche 42 folgt hierbei dem bereits anhand von Fig. 7a, 8a, 9a und 10a verdeutlichten Konstruktionsprinzip. Weiter sind in Fig. 11 Verbindungsbereiche 43 gezeigt, welche jeweils ein, zwei oder vier Sendebereiche 41 oder Empfangsbereiche 42 miteinander kontaktieren. Besonders vorteilhaft ist hierbei, dass die zwei oder vier Sendebereiche 41 oder Empfangsbereiche 42 verbindenden Verbindungsbereiche 43 jeweils Querverbindungen aufweisen, welche quer zueinander liegende Sendebereiche bzw. Empfangsbereiche miteinander verbinden. Weiter vorteilhaft ist hierbei noch die in Fig. 11 gezeigte alternierende Ausführung der Sendebereiche 43 an der Oberseite bzw. Unterseite der Matrix.

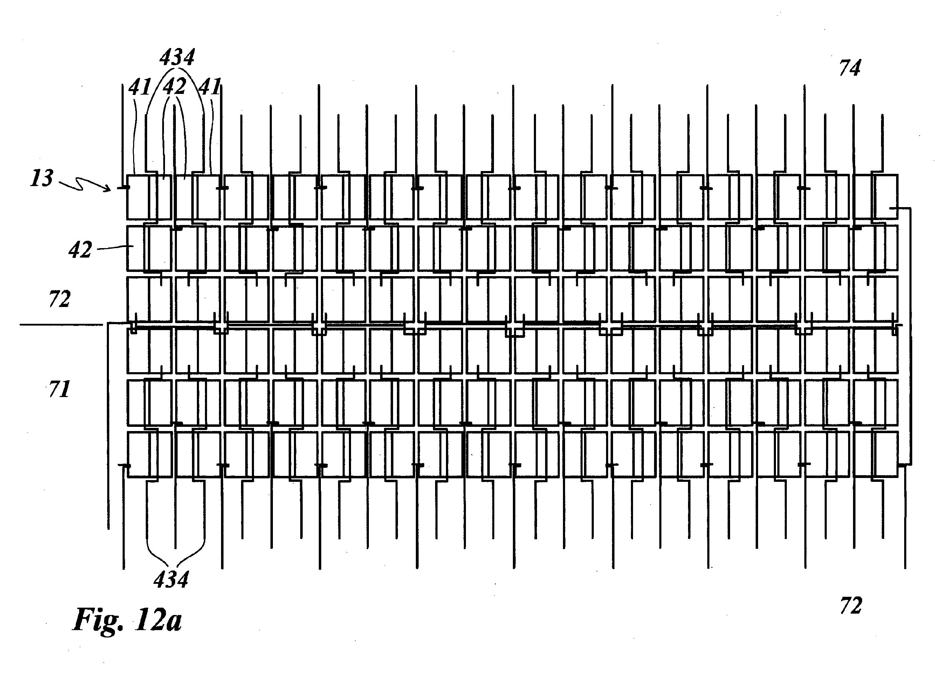

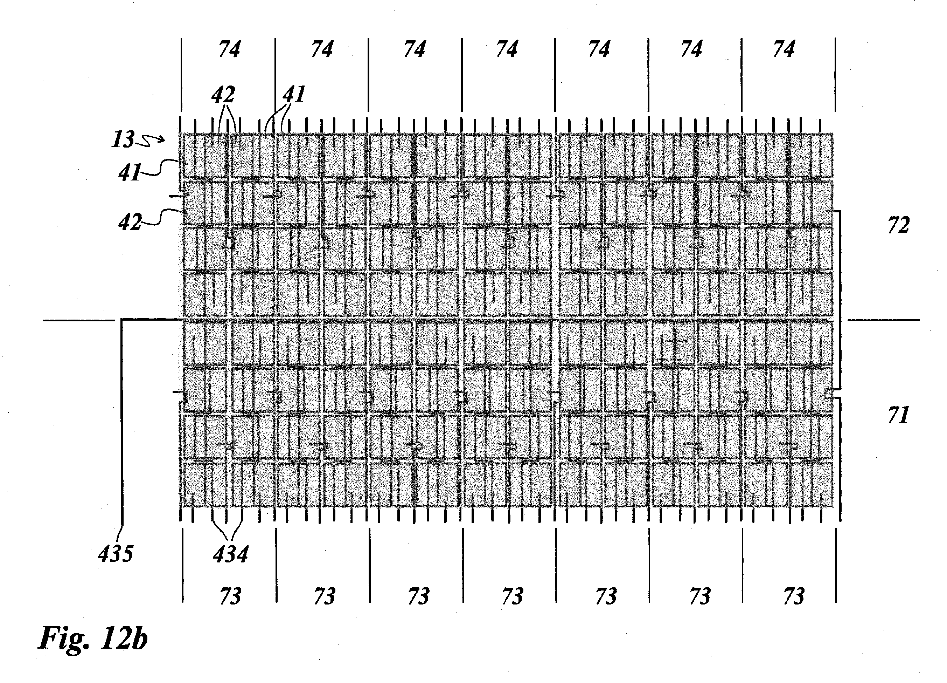

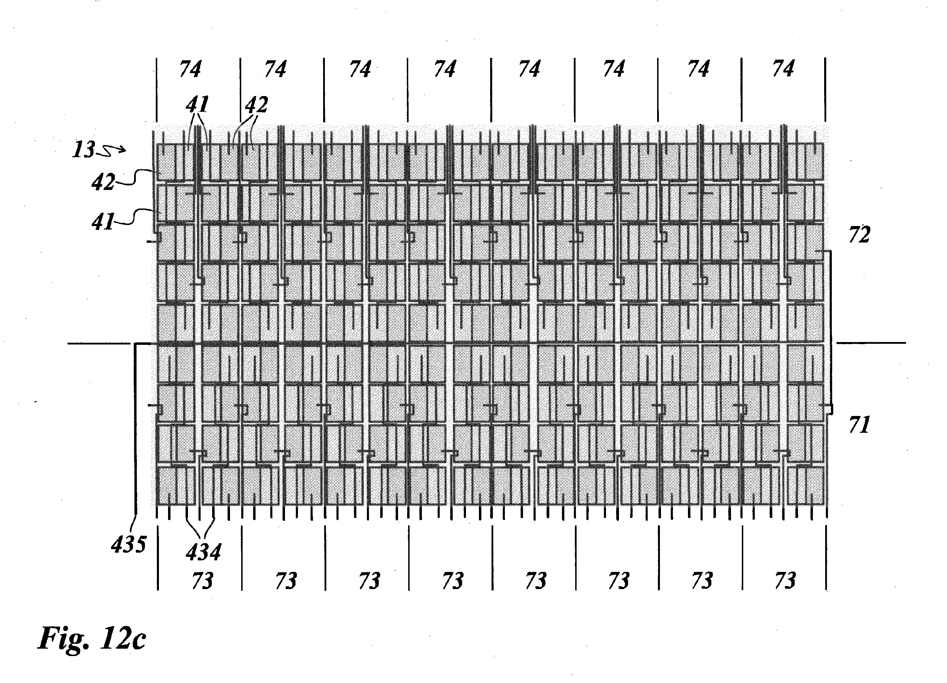

Fig. 12a bis Fig. 12b zeigen eine Matrix mit 6 x 8, 8 x 14 und 1 x 16 Touchfeldern 13. Diese Matrizen sind gemäß dem Funktionsprinzip aufgebaut, welches bereits anhand der Figuren Fig. 7b bis Fig. 10b erläutert worden ist.

Die Matrizen weisen so zwei Teilbereiche 71 und 72 auf. Jeder der Teilbereiche 71 und 72 setzt sich weiter aus einer iterativen Anordnung von Teilbereichen 73 bzw. 74 zusammen, welche jeweils über einen analogen Aufbau verfügen. Die Teilbereiche 73 bzw. 74 lassen sich so in beliebiger Anzahl in den Teilbereichen 71 bzw. 72 anordnen, sodass gemäß dem anhand der Figuren Fig. 12a bis Fig. 12c verdeutlichten Konstruktionsprinzipien Matrizen mit einer beliebigen Anzahl von Spalten realisiert werden können, abhängig von der Anzahl der Teilbereiche 73 und 74, welche in den Teilbereichen 71 und 72 enthalten sind.

## Patentansprüche

1. Mehrschichtkörper (1) mit einem für das menschliche Auge transparenten ersten Bereich (11), mit einer Vielzahl von in dem ersten Bereich (11) angeordneten Touchfeldern (13), mit einem zumindest im ersten Bereich (11) transparenten Trägersubstrat (30) und mit einer zumindest im ersten Bereich (11) für das menschliche Auge transparenten, partiellen, elektrisch leitfähigen ersten Schicht (31), die im ersten Bereich (11) elektrisch leitfähige Sendebereiche (41), Empfangsbereiche (42) und Verbindungsbereiche (43, 431 - 435) aufweist, die jeweils von einem Muster von elektrisch leitfähigen, nicht transparenten Bahnen (40) ausgebildet werden, wobei die leitfähigen Bahnen hierbei aus einem Material bestehen und mit einer Materialdicke aufgebracht sind, bei welcher die erste elektrisch leitfähige Schicht bei vollflächiger Ausbildung mittels dieser Materialien für den menschlichen Betrachter nicht transparent erscheint und wobei die Breite der Bahnen (40) im ersten Bereich (11) so gewählt ist, dass die elektrisch leitfähigen Sendebereiche (41), Empfangsbereiche (42) und Verbindungsbereiche (43, 431 - 435) im ersten Bereich (11) für das menschliche Auge transparent sind, wobei im Bereich jedes Touchfeldes (13) in der ersten Schicht (31) einer der elektrisch leitfähigen Sendebereiche (41) und einer der elektrisch leitfähigen Empfangsbereiche (42) ausgebildet sind, die galvanisch voneinander getrennt beidseits eines diese trennenden Spalts (45) angeordnet sind, wobei n Sendebereiche (41) unterschiedlicher Touchfelder (13) in der ersten Schicht (31) über einen der in der ersten Schicht ausgebildeten elektrisch leitfähigen Verbindungsbereiche (43) elektrisch miteinander und mit einem außerhalb des ersten Bereichs (11) in der ersten Schicht (31) ausgebildeten Kontaktbereich verbunden sind und m Empfangsbereiche (42) unterschiedlicher Touchfelder (13) in der ersten Schicht (31) über einen der in der ersten Schicht ausgebildeten elektrisch leitfähigen Verbindungsbereiche (43, 431 - 435) elektrisch miteinander und mit einem außerhalb des ersten Bereichs (11) in der ersten Schicht (31) ausgebildeten Kontaktbereich verbunden sind, wobei n ≥ 2 und m ≥ 2 ist, wobei
die Touchfelder (13) gemäß einer 2-dimensionalen Matrix mit zwei oder mehr Spalten (51) und mit zwei oder mehr Zeilen (52) angeordnet sind, wobei
bei den Touchfeldern (13) einer ersten Gruppe von Touchfeldern der Sendebereich (41) jeweils links von dem Empfangsbereich (42) angeordnet ist, und bei den Touchfeldern (13) einer zweiten Gruppe von Touchfeldern der Sendebereich (41) jeweils rechts von dem Empfangsbereich (42) angeordnet ist, wobei in jeder der Zeilen (72) der Matrix alternierend Touchfelder der ersten Gruppe und der zweiten Gruppe nebeneinander angeordnet sind, sodass sich an der Grenze zwischen zwei Touchfeldern derselben Zeile jeweils zwei Sendebereiche (41) oder zwei Empfangsbereiche (42) gegenüber liegen, und wobei in einem ersten Teilbereich (71) der Matrix sowohl in Richtung der Zeilen (52) als auch in Richtung der Spalten (51) alternierend Touchfelder (13) der ersten Gruppe und zweiten Gruppe nebeneinander angeordnet sind, sodass sich an der Grenze zwischen zwei Touchfeldern (13) derselben Zeile (52) abwechselnd zwei Sendebereiche (41) und zwei Empfangsbereiche (42) gegenüberliegen, wobei die Matrix im ersten Teilbereich (71) zwei oder mehr Zeilen (52) und zwei oder mehr Spalten (51) aufweist.

2. Mehrschichtkörper (1) nach Anspruch 1,
**dadurch gekennzeichnet,**
**dass** in jeder Spalte (51) jeweils Touchfelder (13) der gleichen Gruppe von Touchfeldern angeordnet sind.

3. Mehrschichtkörper nach einem der Ansprüche 1 bis 2,
**dadurch gekennzeichnet,**
**dass** eine Sendegruppe (61) von vier benachbart zueinander angeordneten Sendebereichen (41) über einen der Verbindungsbereiche (431) miteinander und mit den zugeordneten Kontaktbereichen verbunden sind und/oder eine Empfangsgruppe (62) von vier benachbart zueinander angeordneten Empfangsbereichen (42) über einen der Verbindungsbereiche (431) miteinander und mit dem zugeordneten Kontaktbereich verbunden sind.

4. Mehrschichtkörper (1) nach einem der Ansprüche 1 bis 3,
**dadurch gekennzeichnet,**
**dass** zwei oder mehr Sendegruppen (61) und zwei oder mehr Empfangsgruppen (62) schachbrettartig zueinander versetzt angeordnet sind, sodass zu zumindest einer Sendegruppe (61) vier Empfangsgruppen (62) oder zu zumindest einer Empfangsgruppe (62) vier Sendegruppen (61) benachbart zueinander angeordnet sind.

5. Mehrschichtkörper nach einem der Ansprüche 1 bis 4,
**dadurch gekennzeichnet,**
**dass** die Verbindungsbereiche (43, 432 - 435) in Bezug auf den ersten Bereich (11) von innen nach außen verlaufende Leiterbahnabschnitte (44) aufweisen, die im Grenzbereich zwischen zwei Spalten (51) oder zwei Zeilen (52) der Matrix verlaufen, wobei insbesondere vier oder mehr derartige Leiterbahnabschnitte (44) vorgesehen sind, die sternförmig nach allen Seiten von innen nach außen verlaufen.

6. Mehrschichtkörper (1) nach einem der Ansprüche 1 bis 5,
**dadurch gekennzeichnet,**
**dass** von dem jeweiligen Verbindungsbereich (43) zwei oder mehr benachbart angeordnete Sende- oder Empfangsbereiche (41, 42) zu einem vollflächig elektrisch leitfähigen Bereich verbunden sind, der insbesondere eine rechteckförmig, quadratische oder achteckförmige Formgebung besitzt.

7. Mehrschichtkörper (1) nach einem der Ansprüche 1 bis 6,
**dadurch gekennzeichnet,**
**dass** die Zeilen der Matrix und die Längsachse des ersten Bereichs (11) einen Winkelversatz zueinander aufweisen, insbesondere einen 45°-Winkel einschließen.

8. Mehrschichtkörper (1) nach einem der Ansprüche 1 bis 7,
**dadurch gekennzeichnet,**
**dass** jeweils zwei oder mehr benachbart angeordnete Sendebereiche (41) zu einer Sendegruppe (61) oder jeweils zwei oder mehr benachbart angeordnete Empfangsbereiche (42) zu einer Empfangsgruppe (62) gruppiert sind, und dass ein oder mehrere der Verbindungsbereiche (432, 433) in Bezug auf den ersten Bereich (11) von innen nach außen verlaufende Leiterbahnenabschnitte (44) aufweisen, die jeweils eine oder mehrere der Sendegruppen (61) oder Empfangsgruppen (62) zerschneiden, wobei insbesondere die Leiterbahnabschnite (441) in dem Bereich, in dem sie eine Sende- oder Empfangsgruppe (61, 62) zerschneiden, eine Verbreiterung aufweisen.

9. Mehrschichtkörper (1) nach einem der vorhergehenden Ansprüche,
**dadurch gekennzeichnet,**
**dass** in dem ersten Teilbereich (71)
a) jeweils sämtliche Empfangsbereiche (42) jeder Spalte (51) oder
b) sämtliche Sendebereiche (41) jeder Spalte (51)
über einen jeweiligen Verbindungsbereich (43, 434) miteinander elektrisch verbunden sind, wobei insbesondere im Fall a) sämtliche Sendebereiche (41) der obersten Zeile bzw. im Fall b) sämtliche Empfangsbereiche (42) der obersten Zeile über einen jeweiligen Verbindungsbereich (435) miteinander elektrisch verbunden sind.

10. Mehrschichtkörper (1) nach einem der vorhergehenden Ansprüche,
**dadurch gekennzeichnet,**
**dass** ein oder mehrere der Verbindungsbereiche (43) im ersten Teilbereich (71) in Richtung der Spalten (51) der Matrix in Bezug auf den ersten Bereich (11) von innen nach außen verlaufende Leiterbahnabschnitte (44) aufweisen, die insbesondere in dem Grenzbereich zwischen zwei Spalten (51) der Matrix angeordnet sind.

11. Mehrschichtkörper (1) nach einem der vorhergehenden Ansprüche,
**dadurch gekennzeichnet,**
**dass** die Matrix einen zweiten Teilbereich aufweist, der oberhalb des ersten Teilbereichs der Matrix angeordnet ist und dass in dem zweiten Teilbereich (72) der Matrix ebenfalls sowohl in den Zeilen als auch in den Spalten alternierend Touchfelder (13) der ersten Gruppe und der zweiten Gruppe nebeneinander angeordnet sind, wobei insbesondere der zweite Teilbereich eine in Bezug auf die Grenzlinie zwischen ersten und zweiten Teilbereich spiegelsymmetrische Anordnung von Sendebereichen (41) sowie Empfangsbereichen (42) und / oder von Verbindungsbereichen in Bezug zu dem ersten Teilbereich (71) aufweist.

12. Mehrschichtkörper (1) nach einem der vorhergehenden Ansprüche,
**dadurch gekennzeichnet,**
**dass** die Matrix mindestens einen dritten Teilbereich (73, 74) aufweist, der die gleiche Anordnung von Sendebereichen (41) sowie Empfangsbereichen (42) und/oder von Verbindungsbereichen (43) wie der erste Teilbereich (71) oder der zweite Teilbereich (72) aufweist, und dass die dritten Teilbereiche (73, 74) neben dem ersten Teilbereich (71) bzw. neben dem zweiten Teilbereich (72) angeordnet sind.

13. Mehrschichtkörper (1) nach einem der vorhergehenden Ansprüche,
**dadurch gekennzeichnet,**
**dass** in einem den ersten Bereich (11) umgebenen zweiten Bereich (12) eine elektrisch leitfähige zweite Schicht (33) vorgesehen ist, über die zwei oder mehr der Verbindungsbereiche (43) der ersten Schicht (31) elektrisch miteinander gekoppelt sind, wobei insbesondere die Kontaktbereiche der ersten Schicht (31) über die zweite Schicht (33) und/oder über in der ersten Schicht (31) ausgebildete Leiterbahnen mit einem elektrischen Kontaktverbinder (20) verbunden sind oder einen elektrischen Kontaktverbinder oder Teile eines elektrischen Kontaktverbinders ausbilden.

14. Mehrschichtkörper nach einem der vorhergehenden Ansprüche,
**dadurch gekennzeichnet,**
**dass** in jedem Touchfeld der Spalt zwischen Sendebereich und Empfangsbereich mäanderförmig ausgebildet ist, wobei insbesondere ein, mehrere oder alle Touchfelder dreieckig ausgebildet sind und jeweils einen mäanderförmigen Spalt zwischen Sendebereich und Empfangsbereich aufweisen.

15. Mehrschichtkörper nach einem der vorhergehenden Ansprüche,
**dadurch gekennzeichnet,**
**dass** der jeweilige trennende Spalt zwischen den Sendebereichen (41) und den Empfangsbereichen (42) eine andere Breite aufweist, als der Spalt zwischen den herausgeführten Anschlussleiterbahnen innenliegender Touchfelder (19) und den jeweils an diese angrenzenden Sende- und/oder Empfangsbereichen.

## Claims

1. Multilayer body (1) having a first region (11) which is transparent to the human eye, having a plurality of touchfields (13) arranged in the first region (11), having a transparent carrier substrate (30) at least in the first region (11) and having a first layer (31) at least in the first region (11), said first layer being transparent to the human eye, partial, electrically conductive and having electrically conductive transmission regions (41), receiving regions (42) and connection regions (43, 431 - 435) in the first region (11) which are each formed from a pattern of electrically conductive, non-transparent paths (40), wherein the conductive paths consist of a material and are applied at a material thickness at which the first electrically conductive layer appears to be non-transparent to the human viewer in full-surface formation by means of these materials and wherein the width of the paths (40) in the first region (11) is selected in such a way that the electrically conductive transmission regions (41), receiving regions (42) and connection regions (43, 431 - 435) in the first region (11) are transparent to the human eye, wherein one of the electrically conductive transmission regions (41) and one of the electrically conductive receiving regions (42) are formed in the region of each touch field (13) in the first layer (31), which are arranged to be galvanically isolated from one another on both sides of one of these isolating columns (45), wherein n transmission regions (41) of different touch fields (13) in the first layer (31) are electrically connected to one another and to a contact region formed outside the first region (11) in the first layer (31) via one of the electrically conductive connection regions (43) formed in the first layer and m receiving regions (42) of different touch fields (13) in the first layer (31) are connected electrically to one another and to a contact region formed outside the first region (11) in the first layer (31) via one of the electrically conductive connection regions (43, 431 - 435) formed in the first layer, wherein n ≥ 2 and m ≥ 2, wherein
the touch fields (13), according to a 2-dimensional matrix, are arranged with two or more columns (51) and with two or more rows (52), wherein
for the touch fields (13) of a first group of touch fields, the transmission region (41) is always arranged left of the receiving region (42), and for touch fields (13) of a second group of touch fields, the transmission region (41) is always arranged right of the receiving region (42), wherein alternating touch fields of the first group and of the second group are arranged next to one another in each row (72) of the matrix, such that two transmission regions (41) or two receiving regions (42) lie opposite one another on the border between two touch fields in the same row, and wherein alternating touch fields (13) of the first group and of the second group are arranged next to one another in a first section (71) of the matrix in the direction of the rows (52) as well as in the direction of the columns (51), such that two transmission regions (41) and two receiving regions (42) alternately lie opposite one another on the border between two touch fields (13) in the same row (52), wherein the matrix has two or more rows (52) and two or more columns (51) in the first section (71).

2. Multilayer body (1) according to claim 1, **characterised in that** touch fields (13) of the same group of touch fields are each arranged in each column (51).

3. Multilayer body according to one of claims 1 to 2, **characterised in that** a transmission group (61) of four transmission regions (41) arranged adjacent to one another are connected to one another and to the corresponding contact regions via one of the connection regions (431) and/or a receiving group (62) of four receiving regions (42) arranged adjacent to one another are connected to one another and to the corresponding contact region via one of the connection regions (431).

4. Multilayer body (1) according to one of claims 1 to 3, **characterised in that** two or more transmission groups (61) and two or more receiving groups (62) are arranged to be offset from one another in a chequered manner, such that four receiving groups (62) for at least one transmission group (61) or four transmission groups (61) for at least one receiving group (62) are arranged to be adjacent to one another.

5. Multilayer body according to one of claims 1 to 4, **characterised in that** the connection regions (43, 432-435) have conductor path sections (44) running from the inside to the outside with respect to the first region (11), which run in the border region between two columns (51) or two rows (52) of the matrix, wherein, in particular, four or more conductor path sections (44) of this sort are provided, which run radially to all sides from the inside to the outside.

6. Multilayer body (1) according to one of claims 1 to 5, **characterised in that** two or more adjacently arranged transmission or receiving regions (41, 42) are connected from the respective connection region (43) to a full-surface electrically conductive region, which has a rectangular, square or octagonal design in particular.

7. Multilayer body (1) according to one of claims 1 to 6, **characterised in that** the rows of the matrix and the longitudinal axis of the first region (11) have an angular offset to one another, in particular a 45° angle.

8. Multilayer body (1) according to one of claims 1 to 7, **characterised in that** two or more adjacently arranged transmission regions (41) are each grouped to a transmission group (61) or two or more adjacently arranged receiving regions (42) are each grouped to a receiving group (62) and that one or more of the connection regions (432, 433) have conductor path sections (44) running from the inside to the outside with respect to the first region (11), which each cut one or more of the transmission groups (61) or receiving groups (62), wherein, in particular, the conducting path sections (441) have a widening in the region in which they cut a transmission or receiving group (61, 62).

9. Multilayer body (1) according to one of the preceding claims, **characterised in that**, in the first section (71),
a) all respective receiving regions (42) of each column (51) or
b) all transmission regions (41) of each column (51) are electrically connected to one another via a respective connection region (43, 434), wherein, in particular in event a) , all transmission regions (41) of the top row or, in event b), all receiving regions (42) of the top row are electrically connected to one another via a respective connection region (435).

10. Multilayer body (1) according to one of the preceding claims, **characterised in that** one or more of the connection regions (43) in the first section (71) have conductor path sections (44) running from the inside to the outside with respect to the first region (11) in the direction of the columns (51) of the matrix, said conductor path sections (44) being arranged in the border region between the two columns (51) of the matrix in particular.

11. Multilayer body (1) according to one of the preceding claims, **characterised in that** the matrix has a second section which is arranged above the first section of the matrix and that touch fields (13) of the first group and of the second group are arranged alternately next to one another in the second section (72) of the matrix in the rows as well as in the columns, wherein, in particular, the second section has an arrangement of transmission regions (41) and receiving regions (42) and/or connection regions with respect to the first section (71), which is mirror-symmetric with respect to the border line between the first and second section.

12. Multilayer body (1) according to one of the preceding claims, **characterised in that** the matrix has at least one third section (73, 74) which has the same arrangement of transmission regions (41) and receiving regions (42) and/or connection regions (43) as the first region (71) or the second region (72), and that the third sections (73, 74) are arranged next to the first section (71) or next to the second section (72).

13. Multilayer body (1) according to one of the preceding claims, **characterised in that** an electrically conductive second layer (33) is provided in a second region (12) surrounding the first region (11), via which two or more of the connection regions (43) of the first layer (31) are electrically coupled to one another, wherein, in particular, the contact regions of the first layer (31) are connected to an electrical contact connector (20) via the second layer (33) and/or via conductor paths formed in the first layer (31) or form an electrical contact connector or parts of an electrical contact connector.

14. Multilayer body according to one of the preceding claims, **characterised in that** the gap between the transmission region and the receiving region is formed in a meander shape in each touch field, wherein, in particular, one, several or all touch fields are triangular shaped and each have a meander-shaped gap between the transmission region and the receiving region.

15. Multilayer body according to one of the preceding claims, **characterised in that** the respective isolating gap between the transmission regions (41) and the receiving regions (42) have a different width from the gap between the touch fields (19) inside the external connection conductor paths and the respective transmission and/or receiving regions adjacent to these.

## Revendications

1. Corps multicouche (1) avec une première zone (11) transparente pour l'oeil humain, avec une pluralité de champs tactiles (13) disposés dans la première zone (11), avec un substrat support (30) transparent au moins dans la première zone (11) et avec une première couche (31) électroconductrice partielle, transparente pour l'oeil humain au moins dans la première zone (11), qui comprend dans la première zone (11) des zones d'émission (41), des zones de réception (42) et des zones de connexion (43, 431-435) électroconductrices, qui sont formées chacune par un modèle de pistes (40) électroconductrices non transparentes, les pistes conductrices se composant ici d'un matériau et étant déposées avec une certaine épaisseur de matériau, pour laquelle la première couche électroconductrice, en cas de formation sur toute la surface au moyen de ce matériau, apparaît non transparente pour l'observateur humain, et la largeur des pistes (40) dans la première zone (11) étant choisie de sorte que les zones d'émission (41), les zones de réception (42) et les zones de connexion (43, 431-435) électroconductrices dans la première zone (11) soient transparentes pour l'oeil humain, dans la zone de chaque champ tactile (13) dans la première couche (31), étant formées une des zones d'émission électroconductrices (41) et une des zones de réception électroconductrices (42), qui sont disposées séparées galvaniquement les unes des autres, de chaque côté d'une fente (45) les séparant, n zones d'émission (41) de différents champs tactiles (13) dans la première couche (31) étant connectées électriquement entre elles par le biais d'une des zones de connexion électroconductrices (43) formées dans la première couche (31) et connectées avec une zone de contact formée au dehors de la première zone (11) dans la première couche, et m zones de réception (42) de différents champs tactiles (13) dans la première couche (31) étant connectées électriquement entre elles par le biais d'une des zones de connexion électroconductrices (43, 431-435) formées dans la première couche et connectées avec une zone de contact formée en dehors de la première zone (11) dans la première couche (31), n ≥ 2 et m ≥ 2,
les champs tactiles (13) étant disposés selon une matrice bidimensionnelle ayant deux colonnes (51) ou plus et deux lignes (52) ou plus,
pour les champs tactiles (13) d'un premier groupe de champs tactiles, la zone d'émission (41) étant disposée respectivement sur la gauche de la zone de réception (42) tandis que, pour les champs tactiles (13) d'un second groupe de champs tactiles, la zone d'émission (41) est disposée respectivement sur la droite de la zone de réception (42), dans chacune des lignes (72) de la matrice, des champs tactiles du premier groupe et du second groupe étant disposés en alternance les uns à côté des autres, de sorte que, à la frontière entre deux champs tactiles de la même ligne, deux zones d'émission (41) ou deux zones de réception (42) soient respectivement opposées les unes aux autres, et
dans une première zone partielle (71) de la matrice, aussi bien en direction des lignes (52) qu'en direction des colonnes (51), des champs tactiles (13) du premier groupe et du second groupe étant disposés en alternance les uns à côté des autres, de sorte que, à la frontière entre deux champs tactiles (13) de la même ligne (52), deux zones d'émission (41) et deux zones de réception (42) soient opposées à tour de rôle les unes aux autres, la matrice dans la première zone partielle (71) comprenant deux lignes (52) ou plus et deux colonnes (51) ou plus.

2. Corps multicouche (1) selon la revendication 1,
**caracterisé en ce que**
dans chaque colonne (51), sont disposés respectivement des champs tactiles (13) du même groupe de champs tactiles.

3. Corps multicouche selon l'une quelconque des revendications 1 à 2,
**caractérisé en ce que**
un groupe d'émission (61) de quatre zones d'émission (41) disposées les unes voisines des autres sont connectées entre elles par le biais d'une des zones de connexion (431) et sont connectées avec les zones de contact associées et/ou
**en ce qu'**un groupe de réception (62) de quatre zones de réception (42) disposées les unes voisines des autres sont connectées entre elles par le biais d'une des zones de connexion (431) et sont connectées avec la zone de contact associée.

4. Corps multicouche (1) selon l'une quelconque des revendications 1 à 3,
**caractérisé en ce que**
deux groupes d'émission (61) ou plus et deux groupes de réception (62) ou plus sont disposés décalés les uns par rapport aux autres, à la façon d'un échiquier, de sorte que, pour au moins un groupe d'émission (61), quatre groupes de réception (62) soient disposés les uns voisins des autres ou, pour au moins un groupe de réception (62), quatre groupes d'émission (61) soient disposés les uns voisins des autres.

5. Corps multicouche selon l'une quelconque des revendications 1 à 4,
**caractérisé en ce que**
les zones de connexion (43, 432-435), en ce qui concerne la première zone (11), comprennent des secteurs de pistes conductrices (44) allant de l'intérieur vers l'extérieur qui passent dans la zone frontière entre deux colonnes (51) ou deux lignes (52) de la matrice, en particulier quatre secteurs de piste conductrice (44) de ce genre ou plus qui sont disposés en forme de branches d'étoile allant de tous les côtés de l'intérieur vers l'extérieur, étant prévus.

6. Corps multicouche (1) selon l'une quelconque des revendications 1 à 5,
**caractérisé en ce que**
au moins deux zones d'émission ou de réception (41, 42) voisines sont connectées par la zone de connexion (43) respective en une zone électroconductrice sur toute la surface, qui possède en particulier une forme rectangulaire, quadratique ou octogonale.

7. Corps multicouche (1) selon l'une quelconque des revendications 1 à 6,
**caractérisé en ce que**
les lignes de la matrice et l'axe longitudinal de la première zone (11) présentent respectivement un décalage angulaire, en particulier un angle de 45°.

8. Corps multicouche (1) selon l'une quelconque des revendications 1 à 7,
**caractérisé en ce que**
deux zones d'émission (41) voisines ou plus sont regroupées respectivement en un groupe d'émission (61), ou deux zones de réception (42) voisines ou plus sont regroupées respectivement en un groupe de réception (62), et **en ce qu'**une ou plusieurs des zones de connexion (432, 433) en ce qui concerne la première zone (11) comportent des secteurs de piste conductrice (44) allant de l'intérieur vers l'extérieur qui coupent respectivement un ou plusieurs des groupes d'émission (61) ou des groupes de réception (62), en particulier les secteurs de piste conductrice (441) dans la zone dans laquelle ils coupent un groupe d'émission ou de réception (61, 62), présentant un élargissement.

9. Corps multicouche (1) selon l'une quelconque des revendications précédentes,
**caractérisé en ce que**
dans la première zone partielle (71) :
a) respectivement toutes les zones de réception (42) de chaque colonne (51) ou
b) toutes les zones d'émission (41) de chaque colonne (51)
sont connectées électriquement entre elles par le biais d'une zone de connexion respective (43, 434), en particulier, dans le cas a), toutes les zones d'émission (41) de la ligne la plus haute ou, dans le cas b), toutes les zones de réception (42) de la ligne la plus haute, sont connectées électriquement entre elles par le biais d'une zone de connexion respective (435).

10. Corps multicouche (1) selon l'une quelconque des revendications précédentes,
**caractérisé en ce que**
une ou plusieurs des zones de connexion (43) dans la première zone partielle (71) en direction des colonnes (51) de la matrice, en ce qui concerne la première zone (11), comportent des secteurs de piste conductrice (44) allant de l'intérieur vers l'extérieur qui sont disposés en particulier dans la zone frontière entre deux colonnes (51) de la matrice.

11. Corps multicouche (1) selon l'une quelconque des revendications précédentes,
**caractérisé en ce que**
la matrice comprend une deuxième zone partielle qui est disposée au-dessus de la première zone partielle de la matrice et **en ce que**, également dans la deuxième zone partielle (72) de la matrice, aussi bien dans les lignes que dans les colonnes, sont disposés en alternance des champs tactiles (13) du premier groupe et du second groupe, les uns à côté des autres, en particulier la deuxième zone partielle comportant une disposition symétrique en référence à la ligne frontière entre la première et la deuxième zone partielle, des zones d'émission (41) ainsi que des zones de réception (42) et/ou des zones de connexion en référence à la première zone partielle (71).

12. Corps multicouche (1) selon l'une quelconque des revendications précédentes,
**caractérisé en ce que**
la matrice comprend au moins une troisième zone partielle (73, 74) qui présente la même disposition de zones d'émission (41) ainsi que de zones de réception (42) et/ou de zones de connexion (43), comme la première zone partielle (71) ou la deuxième zone partielle (72), et **en ce que** les troisièmes zones partielles (73, 74) sont disposées à côté de la première zone partielle (71) ou à côté de la deuxième zone partielle (72).

13. Corps multicouche (1) selon l'une quelconque des revendications précédentes,
**caractérisé en ce que**
il est prévu dans une seconde zone (12) entourant la première zone (11) une seconde couche électroconductrice (33) par le biais de laquelle deux zones de connexion (43) ou plus de la première couche (31) sont couplées électriquement entre elles, en particulier les zones de contact de la première couche (31) étant connectées par le biais de la seconde couche (33) et/ou par le biais de pistes conductrices formées dans la première couche (31), à un lien de contact électrique (20) ou formant un lien de contact électrique ou des parties d'un lien de contact électrique.

14. Corps multicouche selon l'une quelconque des revendications précédentes,
**caractérisé en ce que**
dans chaque champ tactile, la fente entre la zone d'émission et la zone de réception est conçue selon une forme de méandre, en particulier un, plusieurs ou tous les champs tactiles, sont conçus de forme triangulaire et comportent chacun une fente en forme de méandre entre la zone d'émission et la zone de réception.

15. Corps multicouche selon l'une quelconque des revendications précédentes,
**caractérisé en ce que**
la fente de séparation respective entre les zones d'émission (41) et les zones de réception (42) présente une autre largeur que la fente entre les pistes conductrices de raccordement sortant des champs tactiles (19) internes et les zones d'émission et/ou de réception respectives limitrophes de ceux-ci.
